(19) **Europäisches Patentamt / European Patent Office / Office européen des brevets**

(11) **EP 4 723 782 A1**

(12) **EUROPEAN PATENT APPLICATION**
published in accordance with Art. 153(4) EPC

(43) Date of publication:
**08.04.2026 Bulletin 2026/15**

(21) Application number: **23937962.1**

(22) Date of filing: **24.05.2023**

(51) International Patent Classification (IPC):
***H04W 72/30*** $^{(2023.01)}$

(52) Cooperative Patent Classification (CPC):
**H04W 24/08; H04W 72/12; H04W 72/30;
H04W 72/50**

(86) International application number:
**PCT/CN2023/096115**

(87) International publication number:
**WO 2024/239288 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **QIAO, Xuemei
Beijing 100085 (CN)**
• **HU, Ziquan
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **COMMUNICATION METHOD AND APPARATUS THEREFOR**

(57) A communication method and an apparatus therefor. The method comprises: determining a scheduling policy, and according to a protocol agreement, determining a first delay corresponding to the scheduling policy, wherein the first delay comprises a physical downlink shared channel (PDSCH) processing delay. The method can solve the problem of certain scheduling policies of base stations being not matched with processing capabilities of eRedCap terminals, and prevent the impact on the PDSCH processing delay, ensuring the communication performance, and improving the communication capability.

```
┌─────────────────────────────────────────────┐
│      a scheduling policy is determined        │──⌐ S201
└─────────────────────────────────────────────┘
                      │
                      ▼
┌─────────────────────────────────────────────┐
│ a first time corresponding to the scheduling  │──⌐ S202
│            policy is determined                │
└─────────────────────────────────────────────┘
```

FIG. 2

## Description

### FIELD

The present disclosure relates to the field of communication technology, and more particularly to a communication method and apparatus.

### BACKGROUND

Enhanced reduced capability (eRedCap) terminal has a PDSCH channel baseband bandwidth capability of 5 MHz). As for the PDSCH processing and scheduling timeline of the eRedCap terminal, there is no consensus on how to avoid the problem that certain scheduling policies of a base station do not match the processing capability of the eRedCap terminal.

### SUMMARY

Embodiments of the present disclosure provide a communication method and apparatus to solve the problem that some scheduling policies of a base station do not match the processing capability of an eRedCap terminal, thereby improving communication performance.

Embodiments of a first aspect of the present disclosure provide a communication method, which is performed by a terminal, and includes: determining a scheduling policy, and determining a first time corresponding to the scheduling policy according to a protocol. The first time includes a physical downlink shared channel (PDSCH) processing time.

In the present disclosure, the terminal is an enhanced reduced capability (eRedcap) terminal, and determining the scheduling policy includes: determining the scheduling policy to be a first scheduling policy. The first scheduling policy is that there is a first time interval between a time slot of a first channel scheduled by a network device for the eRedcap terminal and a time slot of a second channel scheduled by the network device for the eRedcap terminal, the first channel is a broadcast PDSCH, and the second channel is a unicast PDSCH.

In the present disclosure, determining the first time corresponding to the scheduling policy according to the protocol includes: determining that the first time is greater than or equal to a second time. The second time is a PDSCH processing time of a non-enhanced reduced capability (non-eRedCap) terminal.

In the present disclosure, the terminal is an enhanced reduced capability (eRedcap) terminal, and determining the scheduling policy includes: determining the scheduling policy to be a second scheduling policy. The second scheduling policy is that back-to-back scheduling by a network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

In the present disclosure, the terminal is an enhanced reduced capability (eRedcap) terminal, and determining the scheduling policy includes: determining the scheduling policy to be a third scheduling policy. The third scheduling policy is that the eRedcap terminal reads system information for a first cell during cell measurement, and the first cell is not a current serving cell of the eRedcap terminal.

In the present disclosure, determining the first time corresponding to the scheduling policy according to the protocol includes: determining that the first time is greater than or equal to a third time. The third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$.

In the present disclosure, the baseband processing includes at least one of channel estimation, channel equalization, signal detection, or demodulation.

In the present disclosure, in a case where the scheduling policy is a third scheduling policy, the method further includes: reading system information for a first cell; and determining a fifth time. The fifth time is a sum of the fourth time and a sixth time, and the sixth time is a time of scheduling restriction or interruption of the non-eRedCap terminal. Within the fifth time, the eRedCap terminal does not perform signal transmission and/or reception in a second cell, and the second cell is a current serving cell of the eRedcap terminal.

In the present disclosure, the terminal is an enhanced reduced capability (eRedcap) terminal, and the method further includes: performing signal reception on the first channel and the second channel based on the first scheduling policy or the second scheduling policy. The first channel is earlier than the second channel.

In the present disclosure, for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

In the present disclosure, the method further includes: sending a second message to a network device. The second message indicates whether the terminal has a first capability, and the first capability supports back-to-back scheduling.

In the present disclosure, determining the first time corresponding to the scheduling policy includes: determining that the first time is greater than or equal to a second time in a case where the scheduling policy is a second scheduling policy. The second time is a PDSCH processing time of a non-enhanced reduced capability (non-eRedCap) terminal. The second scheduling policy is that back-to-back scheduling by a network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device. The first channel is a broadcast PDSCH, and the second channel is a unicast PDSCH.

In the present disclosure, the method further includes: receiving a seventh time sent by the network device, where the seventh time is greater than or equal to the first time; and sending a first message to the network device after the seventh time after a last symbol of the second channel.

In the present disclosure, the first message is at least one of a hybrid automatic repeat request-acknowledgment (HARQ-ACK) message or a random access message (msg3).

In the present disclosure, the method further includes: processing the second channel and preparing the first message based on the first time.

Embodiments of a second aspect of the present disclosure provide a communication method, which is performed by a network device, and includes: determining a scheduling policy, and determining a first time corresponding to the scheduling policy according to a protocol. The first time includes a physical downlink shared channel (PDSCH) processing time.

In the present disclosure, determining the scheduling policy includes: determining the scheduling policy to be a first scheduling policy. The first scheduling policy is that there is a first time interval between a time slot of a first channel scheduled by the network device for an enhanced reduced capability (eRedcap) terminal and a time slot of a second channel scheduled by the network device for the eRedcap terminal, the first channel is a broadcast PDSCH, and the second channel is a unicast PDSCH.

In the present disclosure, determining the first time corresponding to the scheduling policy according to the protocol includes: determining that the first time is greater than or equal to a second time. The second time is a PDSCH processing time of a non-enhanced reduced capability (non-eRedCap) terminal.

In the present disclosure, determining the scheduling policy includes: determining the scheduling policy to be a second scheduling policy. The second scheduling policy is that back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device. The first channel is a broadcast PDSCH, and the second channel is a unicast PDSCH.

In the present disclosure, determining the scheduling policy includes: determining the scheduling policy to be a third scheduling policy. The third scheduling policy is that an eRedcap terminal reads system information for a first cell during cell measurement, and the first cell is not a current serving cell of the eRedcap terminal.

In the present disclosure, determining the first time corresponding to the scheduling policy according to the protocol includes: determining that the first time is greater than or equal to a third time. The third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and N $\geq$ 1.

In the present disclosure, the baseband processing includes at least one of channel estimation, channel equalization, signal detection, or demodulation.

In the present disclosure, in a case where the scheduling policy is a third scheduling policy, the method further includes: sending system information for a first cell to a terminal; and determining a fifth time. The fifth time is a sum of the fourth time and a sixth time, and the sixth time is a time of scheduling restriction or interruption of the non-eRedCap terminal. The network device does not perform transmission and reception scheduling on the terminal within the fifth time, and the network device does not send a message to or receive a message from the terminal within the fifth time.

In the present disclosure, the method further includes: scheduling the first channel and the second channel based on the first scheduling policy or a second scheduling policy. The first channel is earlier than the second channel.

In the present disclosure, for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

In the present disclosure, the method further includes: receiving a second message sent by a terminal. The second message indicates whether the terminal has a first capability, and the first capability supports back-to-back scheduling.

In the present disclosure, determining the first time corresponding to the scheduling policy includes: determining that the first time is greater than or equal to a second time in a case where the scheduling policy is a second scheduling policy. The second time is a PDSCH processing time of a non-enhanced reduced capability (non-eRedCap) terminal. The second scheduling policy is that back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device. The first channel is a broadcast PDSCH, and the second channel is a unicast PDSCH.

In the present disclosure, the method further includes: sending a seventh time to a terminal, where the seventh time is greater than or equal to the first time; and receiving a first message which is sent by the terminal after the seventh time after a last symbol of the second channel.

In the present disclosure, the first message is at least one of a hybrid automatic repeat request-acknowledgment (HARQ-ACK) message or a random access message (msg3).

Embodiments of a third aspect of the present disclosure provide a communication apparatus, which includes a processing module configured to: determine a scheduling policy, and determine a first time corresponding to the scheduling policy according to a protocol. The first time includes a physical downlink shared channel (PDSCH) processing time.

Embodiments of a fourth aspect of the present disclosure provide a communication apparatus, which includes a processing module configured to: determine a scheduling policy, and determine a first time corresponding to the scheduling policy according to a protocol. The first time includes a physical downlink shared channel (PDSCH) processing time.

Embodiments of a fifth aspect of the present disclosure provide a communication device, which includes: a transceiver; a memory; and a processor, connected to the transceiver and the memory, respectively, and configured to execute computer executable instructions on the memory, control wireless signal reception and transmission of the transceiver, and implement the method as described in embodiments of the first aspect or the second aspect.

Embodiments of a sixth aspect of the present disclosure provide a computer readable storage medium, having stored therein instructions that, when executed, cause the method as described in embodiments of the first aspect or the second aspect to be performed.

Embodiments of a seventh aspect of the present disclosure provide a communication system, which includes: a network device and a user equipment (UE). The network device is configured to perform the method as described in embodiments of the first aspect. The terminal is configured to perform the method as described in embodiments of the second aspect.

The communication method and apparatus provided in embodiments of the present disclosure may solve the problem that some scheduling policies of the base station do not match the processing capability of the eRedCap terminal, avoid the influence on the processing time of the PDSCH, ensure the communication performance, and enhance the communication capability.

## BRIEF DESCRIPTION OF THE DRAWINGS

In order to clearly illustrate the technical solutions in embodiments of the present disclosure or in the related art, drawings to be used for the description of embodiments of the present disclosure or the related art are described below.

FIG. 1 is a schematic diagram of an architecture of a communication system according to embodiments of the present disclosure;
FIG. 2 is a flowchart of a communication method according to embodiments of the present disclosure;
FIG. 3 is a flowchart of a communication method according to embodiments of the present disclosure;
FIG. 4 is a flowchart of a communication method according to embodiments of the present disclosure;
FIG. 5 is a flowchart of a communication method according to embodiments of the present disclosure;
FIG. 6 is a flowchart of a communication method according to embodiments of the present disclosure;
FIG. 7 is a flowchart of a communication method according to embodiments of the present disclosure;
FIG. 8 is a flowchart of a communication method according to embodiments of the present disclosure;
FIG. 9 is a flowchart of a communication method according to embodiments of the present disclosure;
FIG. 10 is a flowchart of a communication method according to embodiments of the present disclosure;
FIG. 11 is a flowchart of a communication method according to embodiments of the present disclosure;
FIG. 12 is a schematic block diagram of a communication apparatus according to embodiments of the present disclosure;

FIG. 13 is a schematic block diagram of a communication apparatus according to embodiments of the present disclosure;

FIG. 14 is a schematic block diagram of a communication apparatus according to embodiments of the present disclosure; and

FIG. 15 is a schematic block diagram of a chip system according to embodiments of the present disclosure.

## DETAILED DESCRIPTION

Reference will now be made in detail to illustrative embodiments of the present disclosure, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present disclosure. Instead, they are merely examples of apparatuses and methods consistent with some aspects of the present disclosure as recited in the appended claims.

Terms used in embodiments of the present disclosure are for the purpose of describing specific embodiments, and not intended to limit embodiments of the present disclosure. As used in embodiments of the present disclosure and the appended claims, "a/an" and "the" in a singular form are intended to include plural forms, unless clearly indicated in the context otherwise. It should also be understood that, the term "and/or" used herein represents and includes any one or any possible combinations of one or more associated listed items.

It should be understood that even though terms such as "first," "second" and "third" may be used in embodiments of the present disclosure for describing various information, these information should not be limited by these terms. These terms are used for distinguishing information of the same type from each other. For example, first information may also be referred to as second information, and similarly, the second information may also be referred to as the first information, without departing from the scope of embodiments of the present disclosure. Depending on the context, the term "if" as used herein may be construed to mean "when", "upon" or "in response to determining". For brevity and ease of understanding, terms "greater than" or "less than", "higher than" or "lower than" are used herein for indicating size relationships. However, it may be understood for a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

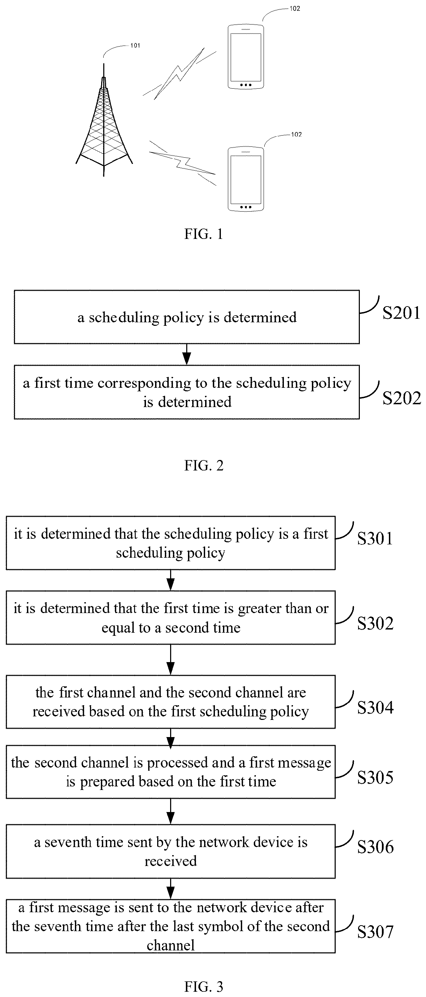

Referring to FIG. 1, FIG. 1 is a schematic architecture diagram of a communication system according to embodiments of the present disclosure. The communication system may include, but not limited to, a network device and a terminal. The number and forms of the devices shown in FIG. 1 are used as an example and do not constitute a limitation on embodiments of the present disclosure. The communication system may include two or more network devices and two or more terminals in practical applications. As an example for illustration, the communication system shown in FIG. 1 includes one network device 101 and one terminal 102.

It should be noted that the technical solutions of embodiments of the present disclosure may be applied to various communication systems, for example, a long term evolution (LTE) system, a 5th generation (5G) mobile communication system, a 5G new radio (NR) system, or other new mobile communication systems in the future. It should also be noted that the sidelink in embodiments of the present disclosure may also be called a side link or a direct link.

The network device 101 in embodiments of the present disclosure is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present disclosure do not limit the specific technique and device form adopted by the network device. The network device according to embodiments of the present disclosure may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal 102 in embodiments of the present disclosure is an entity at a user side for receiving or sending signals, such as a mobile phone. The terminal may also be called a terminal, a user equipment (UE), a mobile station (MS), a mobile terminal (MT), and so on. The terminal may be a car with a communication function, a smart car, a mobile phone, a wearable device, a tablet Pad, a computer with a wireless transceiving function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technique and device form adopted by the terminal.

It can be understood that the communication system described in embodiments of the present disclosure is intended to illustrate the technical solutions of embodiments of the present disclosure more clearly, and does not constitute a limitation on the technical solutions according to embodiments of the present disclosure. Those of ordinary skill in the art will know that with the evolution of the system architecture and the emergence of new service scenarios, the technical solutions according to embodiments of the present disclosure are also applicable to similar technical problems.

It should be noted that the communication method according to any embodiment of the present disclosure may be performed alone, or in combination with a possible implementation manner in other embodiments, or in combination with any technical solution in the related art.

In order to more clearly understand the solution proposed in the present disclosure, the concepts involved in the present disclosure are first introduced below.

1. Terminal's physical downlink shared channel (PDSCH) processing time

The time for a terminal to perform PDSCH processing may include a PDSCH decoding time and a physical uplink control channel (PUCCH) preparation time. The terminal can send uplink signals (such as an HARQ-ACK feedback) only after the PDSCH processing time.

The PDSCH processing time is represented by $T_{proc,1}$:

$$T_{proc,1} = (N_1 + d_{1,1})(2048 + 144) \cdot \kappa 2^{-\mu} \cdot T_c \text{ (Formula 1)},$$

where a value of $N_1$ is related to a value of $\mu$ of a terminal; there is a correspondence between the value of $\mu$ and a subcarrier spacing, and the value of $\mu$ is determined according to the subcarrier spacing; $d_{1,1}$ represents a processing time in a specific case where a PDSCH mapping mode is A or B, $T_c$ is a basic time unit in the communication system, and $\kappa$ is as defined in clause 4.1 of the 3GPP standard TS38.214.

That is, the terminal can only feed back HARQ-ACK after $T_{proc,1}$ after the transmission of the last symbol of PDSCH ends. In other words, the terminal is required that the time for PDSCH processing and HARQ feedback preparing does not exceed $T_{proc,1}$, that is, there is a requirement for the terminal's PDSCH processing capability.

In addition, when the base station indicates a time domain resource for the HARQ-ACK feedback, it needs to consider the PDSCH decoding time and PUCCH preparation time of the terminal. That is, it is required that the time for HARQ-ACK feedback corresponding to the PDSCH scheduled by the base station needs to be greater than or equal to $T_{proc,1}$.

2. eRedCap terminal

The eRedCap technology is an enhanced reduced capability technology proposed in 3GPP 5G R18 based on the RedCap technology proposed in the R17. The eRedCap terminal is also called R18 RedCap terminal. The eRedCap technology aims to further reduce terminal complexity and cost and comprehensively improve 5G network quality and coverage. Non-eRedcap UE may be a legacy terminal, such as an NR eMBB terminal, or an R17 RedCap terminal.

3. PDSCH bandwidth and processing time of eRedCap terminal

In some examples, for an eRedCap terminal, its PDSCH channel baseband bandwidth capability (excluding a size of Fast Fourier Transform (FFT) and a post-FFT buffer) is 5 MHz, and a maximum radio frequency bandwidth is 20 MHz.

A broadcast PDSCH of the eRedCap terminal may carry at least one of system information block 1 (SIB1), other system information (OSI), paging message, or random access response (RAR). The channel bandwidth of these broadcast PDSCHs may reach 20 MHz, that is, they may exceed the PDSCH channel baseband bandwidth capability of the eRedCap terminal (5 MHz). The eRedCap terminal shares the same broadcast PDSCH with the non-eRedCap terminal.

In some examples, the eRedCap terminal may receive the broadcast PDSCH with a maximum bandwidth of 20 MHZ, cache it in the post-FFT buffer, and then perform channel estimation, channel equalization, demodulation and other processing in four batches. For a subcarrier spacing (SCS) of 15 kHz or 30 kHz, the eRedcap terminal processes data of 25 or 12 resource blocks (RB) at most each time. That is, for each reception, multiple times of processing are performed.

For the RAR message, msg3 needs to be fed back. Since the eRedCap terminal needs to additionally perform three times of channel processing on the RAR, additional processing time needs to be introduced for the feeding back of the msg3. In some examples, the eRedCap terminal may not perform HARQ-ACK feedback on the SIB1/OSI/paging message.

4. Back-to-back scheduling

In some examples, back-to-back scheduling includes a case where there is no interval between symbols of two channels scheduled by a network device, or there is no interval between time slots of two channels scheduled by a network device. In other words, symbols or time slots of two channels scheduled by the network device are adjacent.

In some examples, for the legacy terminal, the base station may carry out back-to-back scheduling between a broadcast PDSCH and a unicast PDSCH. Back-to-back scheduling does not affect the processing timing of the unicast PDSCH. For the eRedCap terminal, multiple times of processing may be performed for one reception of the broadcast PDSCH, additional processing time may be introduced, which may further affect the processing time of the subsequent unicast PDSCH.

5. Neighboring cell measurement

When a terminal performs measurement (such as neighboring cell measurement) in a connected state, the network device instructs the terminal to read a cell global ID (CGI) of the neighboring cell. The CGI is carried by the SIB1, so the terminal needs to read and decode the SIB1. However, the terminal can only process the content of one cell at a certain moment, so when the terminal reads or decodes the SIB1 of the neighboring cell or other cells, it will cause scheduling restriction or interruption for the current cell (i.e., the current serving cell).

For the eRedCap terminal, since multiple times of processing may be performed for one reception of the broadcast PDSCH, additional processing time may also be introduced when the terminal reads the SIB1 of the neighboring cell, which will further affect the processing time of the terminal for the current cell.

In view of above, the present disclosure provides a communication solution. Specifically, the present disclosure provides a time determination solution to solve the problem that the processing time of the eRedcap terminal does not match certain scenarios, such as the mismatched time problem caused by introduction of additional processing time in scenarios such as back-to-back scheduling or neighboring cell measurement.

FIG. 2 is a flowchart of a communication method according to embodiments of the present disclosure. The method is performed by a terminal. In the present disclosure, the terminal may be an eRedcap terminal, an R17 RedCap terminal, or a legacy terminal or other terminals. As shown in FIG. 2, the method includes but is not limited to the following steps:

S201, a scheduling policy is determined.

In some embodiments, the scheduling policy may refer to a channel scheduling policy of a network device for the terminal, the terminal may determine the scheduling policy and perform signal reception on a channel scheduled by the network device based on the scheduling policy.

In some embodiments, the terminal may be an eRedcap terminal. The scheduling policy may be that back-to-back scheduling by the network device for the eRedCap terminal is allowed, that is, there is no time interval between a symbol of a first channel scheduled by the network device and a symbol of a second channel scheduled by the network device, or there is no time interval between a time slot of a first channel scheduled by the network device and a time slot of a second channel scheduled by the network device. In some embodiments, the order of the first channel and the second channel may not be restricted, for example, the first channel is earlier than the second channel, or the second channel is earlier than the first channel.

In some embodiments, the first channel is a broadcast PDSCH, the second channel is a unicast PDSCH, and the broadcast PDSCH is earlier than the unicast PDSCH. In an example, although the scheduling policy is that the back-to-back scheduling by the network device for the eRedCap terminal is allowed, in the case where the first channel is earlier than the second channel, the network device is restricted from performing back-to-back scheduling.

In some embodiments, the broadcast PDSCH channel may be an SI channel (i.e., a channel carrying system information, such as a channel carrying an SIB1 message), an OSI channel (i.e., a channel carrying an OSI message), a paging channel (i.e., a channel carrying a paging message), an RAR channel (i.e., a channel carrying a random access response message), etc., which are not limited by the present disclosure.

The present disclosure does not limit the types of the first channel and the second channel. For example, the first channel may be an SI channel, and the second channel may be a unicast PDSCH channel; or the first channel may be an RAR channel, and the second channel may be a unicast PDSCH channel; or the first channel may be a unicast PDSCH channel, and the second channel may be any of the above-mentioned broadcast PDSCH channels, and so on.

In some embodiments, the scheduling policy may be that the back-to-back scheduling by the network device for the eRedCap terminal is not allowed, that is, there is a first time interval between a time slot of a first channel scheduled by a network device for the eRedcap terminal and a time slot of a second channel scheduled by the network device for the eRedcap terminal, and the first time interval is not zero.

In some embodiments, the size of the first time interval is not limited. Optionally, in some embodiments, the size of the first time interval may be that:

1) for an SCS of 15 kHz, a value of the first time interval is 0.5 ms or 1 ms;
2) for an SCS of 30 kHz, a value of the first time interval is 0.25 ms or 0.5 ms.

In some embodiments, the scheduling policy may be that neighboring cell measurement scheduling for the eRedcap terminal is allowed. For example, the eRedcap terminal reads system information for a first cell during cell measurement, and the first cell is not a current serving cell of the eRedcap terminal.

In some embodiments, the scheduling policy may also be other scheduling policies in addition to the above scheduling policies, such as allowing or not allowing back-to-back scheduling for a non-eRedcap terminal, or other scheduling policies for the eRedcap terminal, etc., which are not limited by the present disclosure.

S202, a first time corresponding to the scheduling policy is determined.

In some embodiments, the first time includes a PDSCH processing time.

In some embodiments, the PDSCH processing time may include a time for the terminal to decode the PDSCH (also called a PDSCH decoding time of the terminal) and a time for the terminal to prepare a PUCCH (also called a PUCCH preparation time of the terminal).

In some embodiments, the processing time from the PDSCH to an uplink channel may also include a high layer processing time. The high layer processing time may include a MAC layer processing time, for example a processing time for a message like Mac CE or RRC set-up request of the RRC layer. As an example, the processing time from a message carrying RAR to Msg3 may be equal to or greater than a sum of the PDSCH decoding time, the PUCCH preparation time of the terminal, and the MAC layer processing time. As an example, for RAR PDSCH, the MAC layer processing time may be 0.5 ms.

In some embodiments, the terminal may determine the first time corresponding to the scheduling policy according to a protocol. In other optional embodiments, the terminal may determine the first time in other ways, for example the terminal determines the first time by itself through processing, or the terminal determines the first time according to certain information received from the network device or other entities, which are not limited by the present disclosure.

In some embodiments, the first time corresponding to different scheduling policies may be the same or different.

For example, in some embodiments, the scheduling policy is that the back-to-back scheduling by the network device for the eRedCap terminal is not allowed, and the first time may be a PDSCH processing time of a non-eRedcap terminal determined according to a protocol.

For example, in some embodiments, the scheduling policy is that the back-to-back scheduling by the network device for the eRedCap terminal is allowed, the first time may be a sum of the PDSCH processing time of the non-eRedcap terminal determined according to the protocol and an additional offset X, and the additional offset X may cover an additional processing time of the eRedcap terminal. As an example, the additional offset X may be a time for the eRedcap terminal to perform N-1 times of baseband processing of the PDSCH, where N is the number of times of baseband processing performed by the eRedcap terminal for one PDSCH reception, and N is a positive integer and $N \geq 1$. As an example, the number of times of baseband processing performed by the eRedcap terminal for one PDSCH reception may be 4, and the time for each processing is N1, then the additional offset X may be 3*N1.

In some embodiments, the baseband processing includes at least one of: channel estimation, channel equalization, signal detection, or demodulation.

For example, in some embodiments, the scheduling policy is that the back-to-back scheduling by the network device for the eRedCap terminal is allowed, the first time may be the PDSCH processing time of the non-eRedcap terminal determined according to the protocol, and this PDSCH processing time may support the eRedcap terminal to perform additional PDSCH baseband processing, for example, the terminal has a higher parallel processing capability.

For example, in some embodiments, the scheduling policy is that cell measurement (e.g., neighboring cell measurement) scheduling by the network device for the eRedcap is allowed, the eRedcap terminal may read system information for a first cell during cell measurement, and the first cell is not a current serving cell of the eRedcap terminal, for example, the first cell is a neighboring cell or other cell. The first time may be a sum of a time of scheduling restriction or interruption of the non-eRedCap terminal determined according to a protocol and an additional offset X. Within the first time, the eRedCap terminal does not perform signal transmission and/or reception in a second cell, and the second cell is a current serving cell of the eRedCap terminal. As an example, the additional offset X may be a time for the eRedCap terminal to perform N-1 times of baseband processing of the PDSCH, where N is the number of times of baseband processing performed by the eRedcap terminal for one PDSCH reception, and N is a positive integer and $N \geq 1$. As an example, the number of times of baseband processing performed by the eRedcap terminal for one PDSCH reception may be 4, and the time for each processing is N1, then the additional offset X may be 3*N1. For example, the time for the eRedCap terminal to read and decode the neighboring cell SIB1 is 4*N1, and an interruption time for the current serving cell determined by the eRedCap terminal is a sum of the time of scheduling restriction or interruption of the non-eRedCap terminal and 3*N1.

In some embodiments, the baseband processing includes at least one of: channel estimation, channel equalization, signal detection, or demodulation.

In some embodiments of the present disclosure, the terminal may determine the scheduling policy and determine the first time corresponding to the scheduling policy according to the protocol. The scheduling policy is not limited by the present disclosure, and similarly, the determined first time is not limited.

In summary, according to solutions of the present disclosure, the terminal may determine the scheduling policy and determine the first time based on the protocol, and the first time includes the PDSCH processing time. The solutions of embodiments of the present disclosure solve the problem that some scheduling policies of the base station do not match the terminal's processing capability, thereby improving communication performance.

FIG. 3 is a flowchart of a communication method according to embodiments of the present disclosure, the communication method is performed by a terminal, and optionally, the terminal is an eRedcap terminal, an R17 Redcap terminal, a legacy terminal or other terminal. Based on embodiments described with reference to FIG. 2, as shown in FIG. 3, the method includes but is not limited to the following steps:

S301, it is determined that the scheduling policy is a first scheduling policy.

In some embodiments, the terminal may be an eRedcap terminal, and the first scheduling policy is that there is a first time interval between a time slot of a first channel scheduled by the network device for the eRedcap terminal and a time slot of a second channel scheduled by the network device for the eRedcap terminal, the first channel is a broadcast PDSCH, and the second channel is a unicast PDSCH.

In other words, the first scheduling policy is that back-to-back scheduling by a network device for the eRedCap terminal is not allowed.

In some embodiments, the first time interval may be any value. Optionally, the value of the first time interval may be any of:

1) for an SCS of 15 kHz, the value of the first time interval is 0.5 ms;
2) for an SCS of 15 kHz, the value of the first time interval is 1 ms;
3) for an SCS of 30 kHz, the value of the first time interval is 0.25 ms;
4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the value of the first time interval may be a time for the eRedcap terminal to perform N-1 times of baseband processing of PDSCH, where N is the number of times of baseband processing performed by the eRedcap terminal for one PDSCH reception, and N is a positive integer and $N \geq 1$.

In some embodiments, the baseband processing includes at least one of: channel estimation, channel equalization, signal detection, or demodulation.

For example, the number of times of baseband processing performed by the eRedcap terminal for one PDSCH reception may be 4, and the time for each processing is N1, then the value of the first time interval may be 3*N1.

S302, it is determined that the first time is greater than or equal to a second time.

In some embodiments, the terminal may determine according to a protocol that the first time is greater than or equal to the second time. For example, the terminal may determine the second time according to a protocol, and determine the first time according to the second time.

In some embodiments, the second time is a PDSCH processing time of a non-enhanced reduced capability (non-eRedCap) terminal.

In some embodiments, the eRedcap terminal may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of $T_{proc,1}$ in the above formula 1.

In some embodiments, the eRedcap terminal may determine the PDSCH processing time of the non-eRedcap terminal as the PDSCH processing time of the eRedcap terminal.

In some embodiments, since there is a time interval between the first channel and the second channel, and the time interval may cover an additional processing time of the eRedcap terminal, so the eRedCap terminal may still use the PDSCH processing time of the non-eRedcap terminal without introducing additional processing time.

S303, the first channel and the second channel are received based on the first scheduling policy.

In some embodiments, the first channel is earlier than the second channel. Optionally, the first channel is a broadcast PDSCH, and the second channel is a unicast PDSCH.

In some embodiments, the eRedcap terminal may receive the first channel and the second channel scheduled as above. In other words, the eRedcap terminal may receive signaling or information carried by the first channel and the second channel.

S304, the second channel is processed and a first message is prepared based on the first time.

In some embodiments, after receiving the first channel and the second channel, the eRedcap terminal may process the second channel and prepare the first message based on the first time.

Since there is the first time interval between the first channel and the second channel, there is no need to introduce additional processing time in the first time. Therefore, the eRedcap terminal may process the second channel and prepare the first message based on the PDSCH processing time of the non-eRedcap terminal, thereby avoiding the influence of the additional processing time of the eRedcap terminal for the first channel on the processing of the second channel and the preparation of the first message.

S305, a seventh time sent by the network device is received.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq T_{proc,1}$, where $T_{proc,1}$ represents the PDSCH processing time of the non-eRedcap terminal.

In some embodiments, the terminal may receive DCI signaling sent by the network device, and the DCI signaling includes the seventh time. In other words, the seventh time may be carried by the DCI signaling. The seventh time may also be carried by other downlink signaling, which is not limited by the present disclosure.

S306, a first message is sent to the network device after the seventh time after the last symbol of the second channel.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device. The transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In some embodiments, the terminal may support reporting of capability information to the network device. For example, the terminal may send a second message to the network device, the second message indicates whether the terminal has a first capability, and the first capability supports the back-to-back scheduling.

In these embodiments, the scheduling policy is that the back-to-back scheduling by the network device for the eRedcap terminal is not allowed, it means that there is a time interval between the first channel and the second channel scheduled by the network device, and this time interval may cover the additional processing time of the eRedcap terminal for the PDSCH processing, so the additional processing time of the eRedcap terminal for the broadcast PDSCH will not affect the subsequent unicast PDSCH and the transmission of the feedback signal to the network device, thereby solving the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

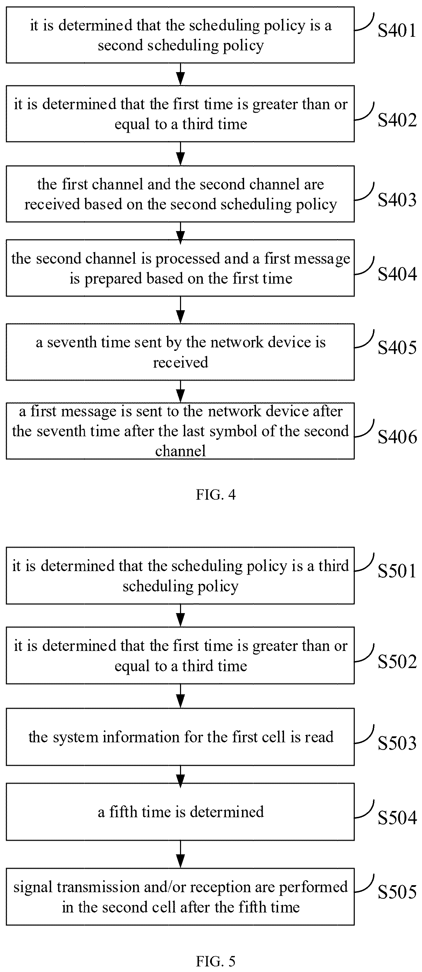

FIG. 4 is a flowchart of a communication method according to embodiments of the present disclosure, the communication method is performed by a terminal, and optionally, the terminal is an eRedcap terminal, an R17 Redcap terminal, a legacy terminal or other terminal. Based on embodiments described with reference to FIG. 2, as shown in FIG. 4, the method includes but is not limited to the following steps:

S401, it is determined that the scheduling policy is a second scheduling policy.

In some embodiments, the terminal may be an eRedcap terminal, and the second scheduling policy is that the back-to-back scheduling by the network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

In other words, the second scheduling policy allows the network device to carry out the back-to-back scheduling for the eRedCap terminal.

S402, it is determined that the first time is greater than or equal to a third time.

In some embodiments, the terminal may determine according to a protocol that the first time is greater than or equal to the third time. For example, the terminal may determine the third time according to a protocol, and determine the first time according to the third time.

In some embodiments, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$.

In some embodiments, the baseband processing includes at least one of: channel estimation, channel equalization, signal detection, or demodulation.

In some embodiments, the eRedcap terminal may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of $T_{proc,1}$ in the above formula 1.

In some embodiments, the fourth time may be the time for the eRedcap terminal to perform N-1 times of baseband processing of PDSCH, where N is the number of times of baseband processing performed by the eRedcap terminal for one PDSCH reception, and N is a positive integer and $N \geq 1$. For example, the number of times of baseband processing performed by the eRedcap terminal for one PDSCH reception is 4, and the time for each processing is N1, then a value of the fourth time may be 3*N1.

In some embodiments, the baseband processing includes at least one of: channel estimation, channel equalization, signal detection, or demodulation.

In some embodiments, the fourth time may be any value. Optionally, the value of the fourth time may be any of:

1) for an SCS of 15 kHz, the value of the first time interval is 0.5 ms;
3) for an SCS of 15 kHz, the value of the first time interval is 1 ms;
3) for an SCS of 30 kHz, the value of the first time interval is 0.25 ms;
4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the eRedcap terminal may determine a sum of the PDSCH processing time (i.e., the second time) of the non-eRedcap terminal and an additional offset X (i.e., the fourth time) as the PDSCH processing time of the eRedcap terminal.

In some embodiments, there is no time interval between the first channel and the second channel, in other words, the network device carries out the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the additional offset (i.e., the fourth time) is introduced to cover the additional processing time of the eRedcap terminal, avoiding the problem that the processing time of the eRedcap terminal does not match certain scenarios, such as the problem that the back-to-back scheduling does not match the capability of the eRedcap terminal.

S403, the first channel and the second channel are received based on the second scheduling policy.

In some embodiments, the first channel is earlier than the second channel. Optionally, the first channel is a broadcast PDSCH, and the second channel is a unicast PDSCH.

In some embodiments, the eRedcap terminal may receive the first channel and the second channel scheduled according to the above back-to-back scheduling. In other words, the eRedcap terminal may receive signaling or information carried by the first channel and the second channel.

S404, the second channel is processed and a first message is prepared based on the first time.

In some embodiments, after receiving the first channel and the second channel, the eRedcap terminal may process the second channel and prepare the first message based on the first time.

In other words, the additional offset (i.e., the fourth time described above) is introduced into the first time, and the eRedcap terminal may process the second channel based on the first time. In other words, the second channel is processed after the PDSCH processing time of the non-eRedcap terminal and the additional offset to avoid the influence of the additional processing time of the eRedcap terminal on the processing of the second channel, and the first message is prepared for subsequent transmission to the network device.

S405, a seventh time sent by the network device is received.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq T_{proc,1}$ + additional offset X, where $T_{proc,1}$ represents the PDSCH processing time of the non-eRedcap terminal, and the additional offset X represents the fourth time.

In some embodiments, the terminal may receive DCI signaling sent by the network device, and the DCI signaling includes the seventh time. In other words, the seventh time may be carried by the DCI signaling. The seventh time may also be carried by other downlink signaling, which is not limited by the present disclosure.

S406, a first message is sent to the network device after the seventh time after the last symbol of the second channel.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device, and the transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In some embodiments, the terminal may support reporting of capability information to the network device. For example, the terminal may send a second message to the network device, the second message indicates whether the terminal has a first capability, and the first capability supports the back-to-back scheduling.

In these embodiments, the scheduling policy is that the back-to-back scheduling by the network device for the eRedcap terminal is allowed, it means that there is no time interval between the first channel and the second channel scheduled by the network device. In order to avoid the influence of the additional processing time of the eRedcap terminal for the broadcast PDSCH on the subsequent unicast PDSCH and the signal transmission to the network device, the additional offset X (i.e., the fourth time) is introduced to solve the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

FIG. 5 is a flowchart of a communication method according to embodiments of the present disclosure, the communication method is performed by a terminal, and optionally, the terminal is an eRedcap terminal, an R17 Redcap terminal, a legacy terminal or other terminal. Based on embodiments described with reference to FIG. 2, as shown in FIG. 5, the method includes but is not limited to the following steps:

S501, it is determined that the scheduling policy is a third scheduling policy.

In some embodiments, the terminal may be an eRedcap terminal, and the third scheduling policy is that the eRedcap terminal reads system information for a first cell during cell measurement, and the first cell is not a current serving cell of the eRedcap terminal.

In other words, the third scheduling policy is that neighboring cell measurement scheduling of the eRedcap terminal is allowed.

When the terminal performs measurement (such as neighboring cell measurement) in a connected state, the network device instructs the terminal to read a cell global ID (CGI) of the neighboring cell. The CGI is carried by the SIB1, so the terminal needs to read and decode the SIB1. However, the terminal can only process the content of one cell at a certain moment, so when the terminal reads or decodes the SIB1 of the neighboring cell or other cells, it will cause scheduling restriction or interruption for the current cell (i.e., the current serving cell).

For the eRedCap terminal, since multiple times of processing may be performed for one reception of the broadcast PDSCH, additional processing time may also be introduced when the terminal reads the SIB1 of the neighboring cell, which will further affect the processing time of the terminal for the current cell.

S502, it is determined that the first time is greater than or equal to a third time.

In some embodiments, the terminal may determine according to a protocol that the first time is greater than or equal to the third time. For example, the terminal may determine the third time according to a protocol, and determine the first time according to the third time.

In some embodiments, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and N ≥ 1.

In some embodiments, the baseband processing includes at least one of: channel estimation, channel equalization, signal detection, or demodulation.

In some embodiments, the eRedcap terminal may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of $T_{proc,1}$ in the above formula 1.

In some embodiments, the fourth time may be the time for the eRedcap terminal to perform N-1 times of baseband processing of PDSCH, where N is the number of times of baseband processing performed by the eRedcap terminal for one PDSCH reception, and N is a positive integer and N ≥ 1. For example, the number of times of baseband processing performed by the eRedcap terminal for one PDSCH reception is 4, and the time for each processing is N1, then a value of the fourth time may be 3*N1.

In some embodiments, the baseband processing includes at least one of: channel estimation, channel equalization, signal detection, or demodulation.

In some embodiments, the fourth time may be any value. Optionally, the value of the fourth time may be any of:

1) for an SCS of 15 kHz, the value of the first time interval is 0.5 ms;
2) for an SCS of 15 kHz, the value of the first time interval is 1 ms;
3) for an SCS of 30 kHz, the value of the first time interval is 0.25 ms;
4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the eRedcap terminal may determine a sum of the PDSCH processing time (i.e., the second time) of the non-eRedcap terminal and an additional offset X (i.e., the fourth time) as the PDSCH processing time of the eRedcap terminal.

In some embodiments, there is no time interval between the first channel and the second channel, in other words, the network device carries out the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the additional offset (i.e., the fourth time) is introduced to cover the additional processing time of the eRedcap terminal, avoiding the problem that the processing time of the eRedcap terminal does not match certain scenarios, such as the problem that the back-to-back scheduling does not match the capability of the eRedcap terminal.

S503, the system information for the first cell is read.

In some embodiments, the first cell is a non-serving cell of the eRedcap terminal, or in other words, the first cell is not a current serving cell of the eRedcap terminal. For example, the first cell may be a neighboring cell of the current serving cell of the eRedcap terminal or other cells.

During cell measurement, such as neighboring cell measurement, the eRedcap terminal may read the system information of the neighboring cell, for example, read the SIB1 of the neighboring cell.

S504, a fifth time is determined.

In some embodiments, the eRedcap terminal may determine the fifth time according to the first time.

The fifth time is a sum of the fourth time and a sixth time, and the sixth time is a time of scheduling restriction or interruption of the non-eRedCap terminal. Within the fifth time, the eRedCap terminal does not perform signal transmission and/or reception in a second cell, and the second cell is a current serving cell of the eRedcap terminal.

In other words, since the terminal can only process the content of one cell at a certain moment, so when the eRedCap terminal reads the system information of the neighboring cell, scheduling restriction or interruption will occur to the service of the current serving cell. For reading and decoding the SIB1 of the neighboring cell, since the eRedcap terminal still adopts the mode where multiple times of processing are performed for one reception of the SIB1 of the neighboring cell, additional processing time is still introduced, which will affect the scheduling restriction or interruption of the serving cell.

S505, signal transmission and/or reception are performed in the second cell after the fifth time.

In some embodiments, since the eRedcap terminal does not send and/or receive signals in the second cell (i.e., the current serving cell) within the fifth time, the eRedcap terminal may resume signal transmission and reception in the current serving cell after the fifth time.

In these embodiments, since the scheduling policy is cell measurement scheduling, it means that when the eRedcap terminal reads the system information of the neighboring cell during the neighboring cell measurement, it will affect the scheduling restriction or interruption of the current cell. In order to avoid the influence of the additional processing time of the eRedcap terminal for the system information of the neighboring cell on the scheduling restriction or interruption of the current cell, the additional offset X (i.e., the fourth time) is introduced to solve the problem that certain scheduling policies of the base station do not match the terminal's processing capability, thereby improving communication performance.

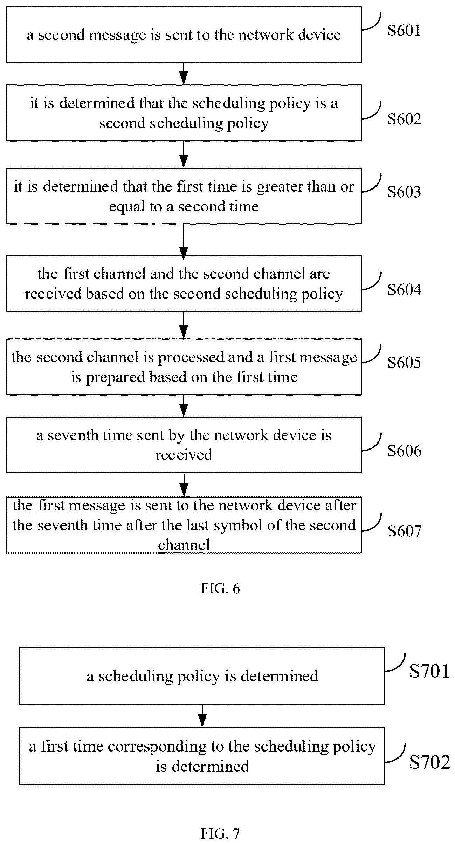

FIG. 6 is a flowchart of a communication method according to embodiments of the present disclosure, the communication method is performed by a terminal, and optionally, the terminal is an eRedcap terminal. Based on embodiments described with reference to FIG. 2, as shown in FIG. 6, the method includes but is not limited to the following steps:

S601, a second message is sent to the network device.

In some embodiments, the terminal may be an eRedcap terminal.

The second message indicates whether the terminal has a first capability, and the first capability supports back-to-back scheduling.

In some embodiments, the eRedCap terminal may also support an additional reporting signaling to indicate to the base station whether it has the capability to support the back-to-back scheduling.

S602, it is determined that the scheduling policy is a second scheduling policy.

The second scheduling policy is that the back-to-back scheduling by the network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

In other words, the second scheduling policy is that the back-to-back scheduling by the network device for the eRedCap terminal is allowed.

In some embodiments, in step S602, the eRedcap terminal may indicate to the network device that it supports the back-to-back scheduling, and when the network device performs the back-to-back scheduling for the eRedcap terminal, the following steps may be performed.

S603, it is determined that the first time is greater than or equal to a second time.

In some embodiments, the terminal may determine that the first time is greater than or equal to the second time according to a protocol. For example, the terminal may determine the second time according to the protocol, and determine the first time according to the second time.

In some embodiments, the second time is a PDSCH processing time of a non-enhanced reduced capability (non-eRedCap) terminal.

In other words, the eRedcap terminal may have an additional processing capability to support the back-to-back scheduling, such as a higher parallel processing capability, which supports the eRedcap terminal to cover the additional processing time of the eRedcap terminal without introducing additional processing time. If the terminal has the additional PDSCH baseband processing capability, there is no need to introduce additional time for the eRedcap terminal, and the back-to-back scheduling will not be affected.

In other words, the eRedcap terminal may support additional reporting signaling. For example, the terminal has an additional parallel processing capability, for example, the terminal has an additional pipeline for parallel processing, so for additional broadcast PDSCH transmission of the eRedcap terminal, PDSCH decoding and PUCCH preparation still can be performed within the PDSCH processing time of the non-eRedcap terminal without introducing additional time.

In some embodiments, the eRedcap terminal may determine the PDSCH processing time of the non-eRedcap terminal as the PDSCH processing time of the eRedcap terminal.

In some embodiments, there is no time interval between the first channel and the second channel, in other words, the network device performs the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the terminal reports its capability to the base station to indicate that it is able to perform the PDSCH decoding and PUCCH preparation within the PDSCH processing time of the non-eRedcap terminal, without affecting the subsequent second channel and information feedback to the network device, thereby avoiding the problem that the processing time of the eRedcap terminal does not match certain scenarios, such as the problem that the capability of the eRedcap terminal does not match for example the back-to-back scheduling scenario.

S604, the first channel and the second channel are received based on the second scheduling policy.

In some embodiments, the first channel is earlier than the second channel. Optionally, the first channel is a broadcast PDSCH, and the second channel is a unicast PDSCH.

In some embodiments, the eRedcap terminal may receive the first channel and the second channel scheduled according to the above back-to-back scheduling. In other words, the eRedcap terminal may receive signaling or information carried by the first channel and the second channel.

S605, the second channel is processed and a first message is prepared based on the first time.

In some embodiments, after receiving the first channel and the second channel, the eRedcap terminal may process the second channel and prepare the first message based on the first time.

In other words, the eRedcap terminal may process the second channel based on the PDSCH processing time of the non-eRedcap terminal. In other words, the second channel processing is performed after the PDSCH processing time of the non-eRedcap terminal. Since the eRedcap terminal has a certain processing capability, such as a higher parallel processing capability, the eRedcap terminal is able to perform multiple times of processing within the PDSCH processing time of the non-eRedcap terminal, thereby avoiding the influence of the additional processing time of the eRedcap terminal on the processing of the second channel, and the first message is prepared for subsequent transmission to the network device.

S606, a seventh time sent by the network device is received.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq Tproc,1$, where $Tproc,1$ represents the PDSCH processing time of the non-eRedcap terminal.

In some embodiments, the terminal may receive DCI signaling sent by the network device, and the DCI signaling includes the seventh time. In other words, the seventh time may be carried by the DCI signaling. The seventh time may also be carried by other downlink signaling, which is not limited by the present disclosure.

S607, the first message is sent to the network device after the seventh time after the last symbol of the second channel.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device, and the transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In these embodiments, since the scheduling policy is that the back-to-back scheduling by the network device for the eRedcap terminal is allowed, and the terminal supports reporting of capability information to the network device, when the terminal's capability is able to cover the additional processing time of the eRedcap terminal, the eRedcap terminal is still able to perform multiple times of PDSCH processing within the PDSCH processing time of the non-eRedcap terminal, without introducing additional offset, thereby avoiding the influence of the additional processing time of the eRedcap terminal for the broadcast PDSCH on the subsequent unicast PDSCH and the signal transmission to the network device, thereby solving the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

In some embodiments of the present disclosure, the communication method may be performed by a terminal, such as an eRedcap terminal, and the communication method may include the following steps:

A first time is determined, and the first time corresponds to a scheduling policy of a network device.

In some examples, the first time may include a PDSCH processing time.

In some examples, the first time corresponding to each scheduling policy is specified by a protocol. In other words, the first time corresponding to each scheduling policy may be those specified by the protocol. For example, the terminal may determine the first time corresponding to each scheduling policy according to the protocol.

For example, in the case where the scheduling policy is that there is a first time interval between a time slot of a first channel scheduled by the network device for the eRedcap terminal and a time slot of a second channel scheduled by the network device for the eRedcap terminal, the first time corresponding to the scheduling policy is greater than or equal to a second time, and the second time is a PDSCH processing time of a non-eRedCap terminal. The first channel is a broadcast PDSCH, and the second channel is a unicast PDSCH.

For another example, in the case where the scheduling policy is that back-to-back scheduling by the network device for the eRedCap terminal is allowed, the first time corresponding to the scheduling policy is greater than or equal to a third time, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$. The back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

For another example, in the case where the scheduling policy is that the eRedcap terminal reads system information for a first cell during cell measurement, the first time corresponding to the scheduling policy is greater than or equal to a third time, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$. The first cell is not a current serving cell of the eRedcap terminal.

For another example, in the case where the scheduling policy is that back-to-back scheduling by the network device for the eRedCap terminal is allowed, the first time corresponding to the scheduling policy is greater than or equal to a second time, and the second time is a PDSCH processing time of a non-enhanced reduced capability (non-eRedCap) terminal. The back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

It should be understood that the steps of embodiments of the present disclosure may be implemented individually or in combination with one or more steps of other embodiments, which is not limited in the present disclosure.

In the communication method of the present disclosure, the terminal may determine the first time corresponding to the scheduling policy of the network device to solve the problem that certain scheduling policies of the base station do not match the processing capability of the terminal, thereby improving the communication performance.

FIG. 7 is a flowchart of a communication method according to embodiments of the present disclosure. The method is performed by a network device. In the present disclosure, the network device may be an access network device or a core network device. The specific model and quantity of the device are not restricted in the present disclosure.

As shown in FIG. 7, the method includes but is not limited to the following steps:

S701, a scheduling policy is determined.

In some embodiments, the scheduling policy may refer to a channel scheduling policy of the network device for a terminal, the network device may determine the scheduling policy and perform channel scheduling based on the scheduling policy.

In some embodiments, the terminal may be an eRedcap terminal.

In some embodiments, the scheduling policy may be that back-to-back scheduling by the network device for the eRedCap terminal is allowed, that is, there is no time interval between a symbol of a first channel scheduled by the network device and a symbol of a second channel scheduled by the network device, or there is no time interval between a time slot of a first channel scheduled by the network device and a time slot of a second channel scheduled by the network device.

In some embodiments, the order of the first channel and the second channel may not be restricted, for example, the first channel is earlier than the second channel, or the second channel is earlier than the first channel.

In some embodiments, the first channel is a broadcast PDSCH, the second channel is a unicast PDSCH, and the broadcast PDSCH is earlier than the unicast PDSCH. In an example, although the scheduling policy is that the back-to-back scheduling by the network device for the eRedCap terminal is allowed, in the case where the first channel is earlier than the second channel, the network device is restricted from performing back-to-back scheduling.

In some embodiments, the broadcast PDSCH channel may be an SI channel (i.e., a channel carrying system information, such as a channel carrying an SIB1 message), an OSI channel (i.e., a channel carrying an OSI message), a paging channel (i.e., a channel carrying a paging message), an RAR channel (i.e., a channel carrying a random access response message), etc., which are not limited by the present disclosure.

The present disclosure does not limit the types of the first channel and the second channel. For example, the first channel may be an SI channel, and the second channel may be a unicast PDSCH channel; or the first channel may be an RAR channel, and the second channel may be a unicast PDSCH channel; or the first channel may be a unicast PDSCH channel, and the second channel may be any of the above-mentioned broadcast PDSCH channels, and so on.

In some embodiments, the scheduling policy may be that the back-to-back scheduling by the network device for the eRedCap terminal is not allowed, that is, there is a first time interval between a time slot of a first channel scheduled by the network device for the eRedcap terminal and a time slot of a second channel scheduled by the network device for the eRedcap terminal, and the first time interval is not zero.

In some embodiments, the size of the first time interval is not limited. Optionally, in some embodiments, the size of the first time interval may be that:

1) for an SCS of 15 kHz, a value of the first time interval is 0.5 ms or 1 ms;
2) for an SCS of 30 kHz, a value of the first time interval is 0.25 ms or 0.5 ms.

In some embodiments, the scheduling policy may be that neighboring cell measurement scheduling for the eRedcap terminal is allowed. For example, the network device sends system information for a first cell to the eRedcap terminal, in other words, the eRedcap terminal reads the system information for the first cell during cell measurement, and the first cell is not a current serving cell of the eRedcap terminal.

In some embodiments, the scheduling policy may also be other scheduling policies in addition to the above scheduling policies, such as allowing or not allowing back-to-back scheduling for a non-eRedcap terminal, or other scheduling policies for the eRedcap terminal, etc., which are not limited by the present disclosure.

S702, a first time corresponding to the scheduling policy is determined.

In some embodiments, the first time includes a PDSCH processing time.

In some embodiments, the PDSCH processing time may include a time for the terminal to decode the PDSCH and a time for the terminal to prepare a PUCCH.

In some embodiments, the processing time from the PDSCH to an uplink channel may also include a high layer processing time. The high layer processing time may be a MAC layer processing time, for example a processing time for a message like Mac CE or RRC set-up request of the RRC layer. As an example, the processing time from a message carrying RAR to Msg3 may be a sum of the PDSCH decoding time, the PUCCH preparation time of the terminal, and the MAC layer processing time. As an example, for RAR PDSCH, the MAC layer processing time may be 0.5 ms.

In some embodiments, the network device may determine the first time corresponding to the scheduling policy according to a protocol. In other optional embodiments, the network device may determine the first time in other ways, for example the network device determines the first time by itself through processing, or the network device determines the first time according to certain information received from the terminal or other entities, which are not limited by the present disclosure.

In some embodiments, the first time corresponding to different scheduling policies may be the same or different.

For example, in some embodiments, the scheduling policy is that the back-to-back scheduling by the network device for the eRedCap terminal is not allowed, and the first time may be a PDSCH processing time of a non-eRedcap terminal determined according to a protocol.

For example, in some embodiments, the scheduling policy is that the back-to-back scheduling by the network device for the eRedCap terminal is allowed, the first time may be a sum of the PDSCH processing time of the non-eRedcap terminal determined according to the protocol and an additional offset X, and the additional offset X may cover an additional processing time of the eRedcap terminal. As an example, the additional offset X may be a time for the eRedcap terminal to perform N-1 times of baseband processing of the PDSCH, where N is the number of times of baseband processing performed by the eRedcap terminal for one PDSCH reception, and N is a positive integer and $N \geq 1$. As an example, the number of times of baseband processing performed by the eRedcap terminal for one PDSCH reception may be 4, and the time for each processing is N1, then the additional offset X may be 3*N1.

In some embodiments, the baseband processing includes at least one of: channel estimation, channel equalization, signal detection, or demodulation.

For example, in some embodiments, the scheduling policy is that the back-to-back scheduling by the network device for the eRedCap terminal is allowed, the first time may be the PDSCH processing time of the non-eRedcap terminal determined according to the protocol, and this PDSCH processing time may support the eRedcap terminal to perform additional PDSCH baseband processing, for example, the terminal has a higher parallel processing capability. The network devices may first receive capability information from the terminal, and the capability information may indicate whether the terminal has a parallel processing capability.

For example, in some embodiments, the scheduling policy is that cell measurement (e.g., neighboring cell measurement) scheduling is allowed for the eRedcap, the network device may send system information for a first cell to the eRedcap terminal, and the eRedcap terminal may read the system information for the first cell during cell measurement, and the first cell is not a current serving cell of the eRedcap terminal, for example, the first cell is a neighboring cell or other cell. The first time may be a sum of a time of scheduling restriction or interruption of a non-eRedCap terminal determined according to a protocol and an additional offset X. Within the first time, the network device does not perform transmission and reception scheduling on the terminal, and the network device does not send a message to or receive a message from the terminal. The second cell is a current serving cell of the eRedcap terminal. As an example, the additional offset X may be a time for the eRedcap terminal to perform N-1 times of baseband processing of the PDSCH, where N is the number of times of baseband processing performed by the eRedcap terminal for one PDSCH reception, and N is a positive integer and N ≥ 1. As an example, the number of times of baseband processing performed by the eRedcap terminal for one PDSCH reception may be 4, and the time for each processing is N1, then the additional offset X may be 3*N1. For example, the time for the eRedCap terminal to read and decode neighboring cell SIB1 is 4*N1, and an interruption time for the current serving cell determined by the eRedcap terminal is a sum of the time of scheduling restriction or interruption of the non-eRedCap terminal and 3*N1.

In some embodiments, the baseband processing includes at least one of: channel estimation, channel equalization, signal detection, or demodulation.

In some embodiments of the present disclosure, the network device may determine the scheduling policy and determine the first time corresponding to the scheduling policy according to the protocol. The scheduling policy is not limited by the present disclosure, and similarly, the determined first time is not limited.

In summary, according to solutions of the present disclosure, the network device may determine the scheduling policy and determine the first time based on the protocol, and the first time includes the PDSCH processing time. The solutions of embodiments of the present disclosure solve the problem that some scheduling policies of the network device do not match the terminal's processing capability, thereby improving communication performance.

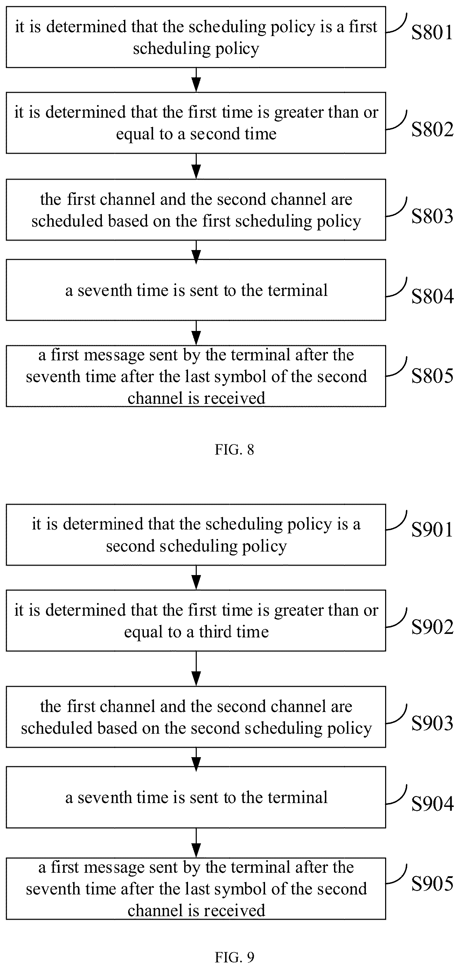

FIG. 8 is a flowchart of a communication method according to embodiments of the present disclosure, the communication method is performed by a network device. Based on embodiments described with reference to FIG. 7, as shown in FIG. 8, the method includes but is not limited to the following steps:

S801, it is determined that the scheduling policy is a first scheduling policy.

The first scheduling policy is that there is a first time interval between a time slot of a first channel scheduled by the network device for the eRedcap terminal and a time slot of a second channel scheduled by the network device for the eRedcap terminal, the first channel is a broadcast PDSCH, and the second channel is a unicast PDSCH.

In other words, the first scheduling policy is that back-to-back scheduling by the network device for the eRedCap terminal is not allowed.

In some embodiments, the first time interval may be any value. Optionally, the value of the first time interval may be any of:

  1) for an SCS of 15 kHz, the value of the first time interval is 0.5 ms;
  2) for an SCS of 15 kHz, the value of the first time interval is 1 ms;
  3) for an SCS of 30 kHz, the value of the first time interval is 0.25 ms;
  4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the value of the first time interval may be a time for the eRedcap terminal to perform N-1 times of baseband processing of PDSCH, where N is the number of times of baseband processing performed by the eRedcap terminal for one PDSCH reception, and N is a positive integer and N ≥ 1.

In some embodiments, the baseband processing includes at least one of: channel estimation, channel equalization, signal detection, or demodulation.

For example, the number of times of baseband processing performed by the eRedcap terminal for one PDSCH reception is 4, and the time for each processing is N1, then the value of the first time interval may be 3*N1.

S802, it is determined that the first time is greater than or equal to a second time.

In some embodiments, the network device may determine according to a protocol that the first time is greater than or equal to the second time. For example, the network device may determine the second time according to a protocol, and determine the first time according to the second time.

In some embodiments, the second time is a PDSCH processing time of a non-enhanced reduced capability (non-eRedCap) terminal.

In some embodiments, the eRedcap terminal may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of Tproc,1 in the above formula 1.

In some embodiments, the network device may determine the PDSCH processing time for the non-eRedcap terminal as the PDSCH processing time for the eRedcap terminal.

In some embodiments, since there is a time interval between the first channel and the second channel, and the time interval may cover an additional processing time of the eRedcap terminal, so the eRedCap terminal may still use the PDSCH processing time of the non-eRedcap terminal without introducing additional processing time.

S803, the first channel and the second channel are scheduled based on the first scheduling policy.

In some embodiments, the first channel is earlier than the second channel. Optionally, the first channel is a broadcast PDSCH, and the second channel is a unicast PDSCH.

In some embodiments, the eRedcap terminal may schedule the first channel and the second channel.

In some embodiments, the first time may be used by the terminal to process the second channel and prepare a first message.

In some embodiments, after receiving the first channel and the second channel, the eRedcap terminal may process the second channel and prepare the first message based on the first time.

Since there is the first time interval between the first channel and the second channel, there is no need to introduce additional processing time in the first time. Therefore, the eRedcap terminal may process the second channel and prepare the first message based on the PDSCH processing time of the non-eRedcap terminal, thereby avoiding the influence of the additional processing time of the eRedcap terminal for the first channel on the processing of the second channel and the preparation of the first message.

S804, a seventh time is sent to the terminal.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq Tproc, 1$, where $Tproc,1$ represents the PDSCH processing time of the non-eRedcap terminal.

In some embodiments, the network device sends DCI signaling to the terminal, and the DCI signaling includes the seventh time. In other words, the seventh time may be carried by the DCI signaling. The seventh time may also be carried by other downlink signaling, which is not limited by the present disclosure.

S805, a first message sent by the terminal after the seventh time after the last symbol of the second channel is received.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device. The transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In some embodiments, the terminal may support reporting of capability information to the network device. For example, the network device may receive a second message sent by the terminal, the second message indicates whether the terminal has a first capability, and the first capability supports the back-to-back scheduling.

In these embodiments, the scheduling policy is that the back-to-back scheduling by the network device for the eRedcap terminal is not allowed, it means that there is a time interval between the first channel and the second channel scheduled by the network device, and this time interval may cover the additional processing time of the eRedcap terminal for the PDSCH processing, so the additional processing time of the eRedcap terminal for the broadcast PDSCH will not affect the subsequent unicast PDSCH and the transmission of the feedback signal to the network device, thereby solving the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

FIG. 9 is a flowchart of a communication method according to embodiments of the present disclosure, the communication method is performed by a network device. Based on embodiments described with reference to FIG. 7, as shown in FIG. 9, the method includes but is not limited to the following steps:

S901, it is determined that the scheduling policy is a second scheduling policy.

The second scheduling policy is that the back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

In other words, the second scheduling policy allows the network device to carry out the back-to-back scheduling for the eRedCap terminal.

S902, it is determined that the first time is greater than or equal to a third time.

In some embodiments, the network device may determine according to a protocol that the first time is greater than or equal to the third time. For example, the network device may determine the third time according to a protocol, and determine the first time according to the third time.

In some embodiments, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and N ≥ 1.

In some embodiments, the baseband processing includes at least one of: channel estimation, channel equalization, signal detection, or demodulation.

In some embodiments, the network device may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of $T_{proc,1}$ in the above formula 1.

In some embodiments, the fourth time may be the time for the eRedcap terminal to perform N-1 times of baseband processing of PDSCH, where N is the number of times of baseband processing performed by the eRedcap terminal for one PDSCH reception, and N is a positive integer and N ≥ 1. For example, the number of times of baseband processing performed by the eRedcap terminal for one PDSCH reception is 4, and the time for each processing is N1, then a value of the fourth time may be 3*N1.

In some embodiments, the baseband processing includes at least one of: channel estimation, channel equalization, signal detection, or demodulation.

In some embodiments, the fourth time may be any value. Optionally, the value of the fourth time may be any of:

1) for an SCS of 15 kHz, the value of the first time interval is 0.5 ms;
3) for an SCS of 15 kHz, the value of the first time interval is 1 ms;
3) for an SCS of 30 kHz, the value of the first time interval is 0.25 ms;
4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the network device may determine a sum of the PDSCH processing time (i.e., the second time) of the non-eRedcap terminal and an additional offset X (i.e., the fourth time) as the PDSCH processing time of the eRedcap terminal.

In some embodiments, there is no time interval between the first channel and the second channel, in other words, the network device carries out the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the additional offset (i.e., the fourth time) is introduced to cover the additional processing time of the eRedcap terminal, avoiding the problem that the processing time of the eRedcap terminal does not match certain scenarios, such as the problem that the back-to-back scheduling does not match the capability of the eRedcap terminal.

S903, the first channel and the second channel are scheduled based on the second scheduling policy.

In some embodiments, the first channel is earlier than the second channel. Optionally, the first channel is a broadcast PDSCH, and the second channel is a unicast PDSCH.

In some embodiments, the eRedcap terminal may carry out the back-to-back scheduling for the first channel and the second channel.

In some embodiments, the first time may be used by the terminal for processing the second channel and preparing the first message.

For example, after receiving the first channel and the second channel, the eRedcap terminal may process the second channel and prepare the first message based on the first time.

In other words, the additional offset (i.e., the fourth time described above) is introduced into the first time, and the eRedcap terminal may process the second channel based on the first time. In other words, the second channel is processed after the PDSCH processing time of the non-eRedcap terminal and the additional offset to avoid the influence of the additional processing time of the eRedcap terminal on the processing of the second channel, and the first message is prepared for subsequent transmission to the network device.

S904, a seventh time is sent to the terminal.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq Tproc,1$ + additional offset X, where Tproc,1 represents the PDSCH processing time of the non-eRedcap terminal, and the additional offset X represents the fourth time.

In some embodiments, the network device may sent DCI signaling to the terminal, and the DCI signaling includes the seventh time. In other words, the seventh time may be carried by the DCI signaling. The seventh time may also be carried by other downlink signaling, which is not limited by the present disclosure.

S905, a first message sent by the terminal after the seventh time after the last symbol of the second channel is received.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device, and the transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In some embodiments, the terminal may support reporting of capability information to the network device. For example, the network device may receive a second message sent by the terminal, the second message indicates whether the terminal has a first capability, and the first capability supports the back-to-back scheduling.

In these embodiments, the scheduling policy is that the back-to-back scheduling by the network device for the eRedcap terminal is allowed, it means that there is no time interval between the first channel and the second channel scheduled by the network device. In order to avoid the influence of the additional processing time of the eRedcap terminal for the broadcast PDSCH on the subsequent unicast PDSCH and the signal transmission to the network device, the additional offset X (i.e., the fourth time) is introduced to solve the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

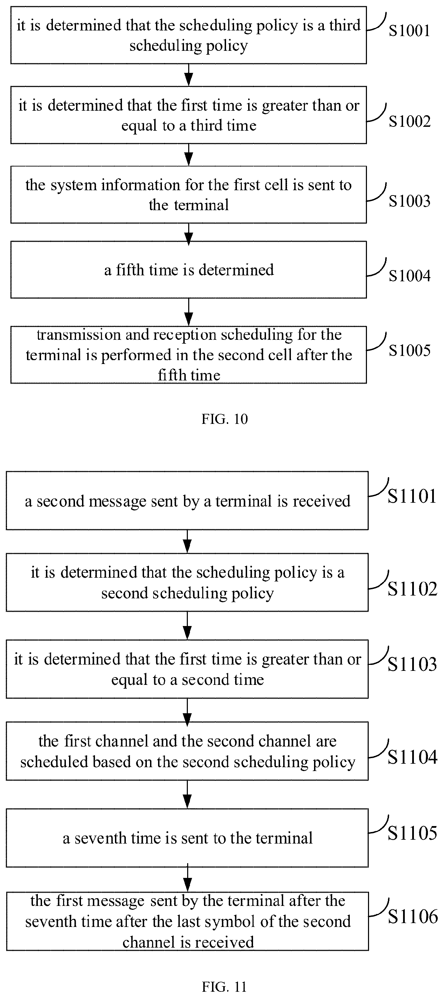

FIG. 10 is a flowchart of a communication method according to embodiments of the present disclosure, the communication method is performed by a network device. Based on embodiments described with reference to FIG. 7, as shown in FIG. 10, the method includes but is not limited to the following steps:

S1001, it is determined that the scheduling policy is a third scheduling policy.

The third scheduling policy is that neighboring cell measurement scheduling for an eRedcap terminal is allowed.

In other words, the third scheduling policy is that the network device sends system information for a first cell to the eRedcap terminal, and the eRedcap terminal reads the system information for the first cell during cell measurement, and the first cell is not a current serving cell of the eRedcap terminal.

When the terminal performs measurement (such as neighboring cell measurement) in a connected state, the network device instructs the terminal to read a cell global ID (CGI) of the neighboring cell. The CGI is carried by the SIB1, so the terminal needs to read and decode the SIB1. However, the terminal can only process the content of one cell at a certain moment, so when the terminal reads or decodes the SIB1 of the neighboring cell or other cells, it will cause scheduling restriction or interruption for the current cell (i.e., the current serving cell).

For the eRedCap terminal, since multiple times of processing may be performed for one reception of the broadcast PDSCH, additional processing time may also be introduced when the terminal reads the SIB1 of the neighboring cell, which will further affect the processing time of the terminal for the current cell.

S1002, it is determined that the first time is greater than or equal to a third time.

In some embodiments, the network device may determine according to a protocol that the first time is greater than or equal to the third time. For example, the network device may determine the second time according to a protocol, and determine the first time according to the third time.

In some embodiments, the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and N ≥ 1.

In some embodiments, the baseband processing includes at least one of: channel estimation, channel equalization, signal detection, or demodulation.

In some embodiments, the network device may determine the PDSCH processing time of the non-eRedcap terminal according to a protocol. In some embodiments, the PDSCH processing time of the non-eRedcap terminal may include a PDSCH decoding time and a PUCCH preparation time of the non-eRedcap terminal.

For example, the second time may be determined with reference to the determination method of $T_{proc,1}$ in the above formula 1.

In some embodiments, the fourth time may be the time for the eRedcap terminal to perform N-1 times of baseband processing of PDSCH, where N is the number of times of baseband processing performed by the eRedcap terminal for one PDSCH reception, and N is a positive integer and N ≥ 1. For example, the number of times of baseband processing performed by the eRedcap terminal for one PDSCH reception is 4, and the time for each processing is N1, then a value of the fourth time may be 3*N1.

In some embodiments, the baseband processing includes at least one of: channel estimation, channel equalization, signal detection, or demodulation.

In some embodiments, the fourth time may be any value. Optionally, the value of the fourth time may be any of:

1) for an SCS of 15 kHz, the value of the first time interval is 0.5 ms;
2) for an SCS of 15 kHz, the value of the first time interval is 1 ms;
3) for an SCS of 30 kHz, the value of the first time interval is 0.25 ms;
4) for an SCS of 30 kHz, the value of the first time interval is 0.5 ms.

In other words, for the SCS of 15/30 kHz, the value of the first time interval may be 0.5/0.25 ms. Alternatively, for the SCS of 15/30 kHz, the value of the first time interval may be 1/0.5 ms.

In some embodiments, the network device may determine a sum of the PDSCH processing time (i.e., the second time) of the non-eRedcap terminal and an additional offset X (i.e., the fourth time) as the PDSCH processing time of the eRedcap terminal.

In some embodiments, there is no time interval between the first channel and the second channel, in other words, the network device carries out the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the additional offset (i.e., the fourth time) is introduced to cover the additional processing time of the eRedcap terminal, avoiding the problem that the processing time of the eRedcap terminal does not match certain scenarios, such as the problem that the back-to-back scheduling does not match the capability of the eRedcap terminal.

S1003, the system information for the first cell is sent to the terminal.

In some embodiments, the network device may send the system information for the first cell to the terminal, and instruct the terminal to read the system information for the first cell.

In some embodiments, the first cell is a non-serving cell of the eRedcap terminal, or in other words, the first cell is not a current serving cell of the eRedcap terminal. For example, the first cell may be a neighboring cell of the current serving cell of the eRedcap terminal or other cells.

During cell measurement, such as neighboring cell measurement, the eRedcap terminal may read the system information of the neighboring cell, for example, read the SIB1 of the neighboring cell.

S1004, a fifth time is determined.

The fifth time is a sum of the fourth time and a sixth time, and the sixth time is a time of scheduling restriction or interruption of the non-eRedCap terminal. The network device does not perform transmission and reception scheduling on the terminal within the fifth time, and the network device does not send a message to or receive a message from the terminal within the fifth time.

In other words, since the terminal can only process the content of one cell at a certain moment, so when the eRedCap terminal reads the system information of the neighboring cell, scheduling restriction or interruption will occur to the service of the current serving cell. For reading and decoding the SIB1 of the neighboring cell, since the eRedcap terminal still adopts the mode where multiple times of processing are performed for one reception of the SIB1 of the neighboring cell, additional processing time is still introduced, which will affect the scheduling restriction or interruption of the serving cell.

S1005, transmission and reception scheduling for the terminal is performed in the second cell after the fifth time.

In some embodiments, since the eRedcap terminal performs measurement on the first cell (i.e., not the current serving cell) and does not send and/or receive signals in the second cell (i.e., the current serving cell) within the fifth time, the network device does not perform the transmission and reception scheduling for the terminal within the fifth time, and the network device does not send a message to or receive a message from the terminal within the fifth time, so the network device performs the transmission and reception scheduling for the eRedcap terminal after the fifth time, and the eRedcap terminal may resume signal transmission and reception in the current serving cell after the fifth time.

In these embodiments, since the scheduling policy is cell measurement scheduling, it means that when the eRedcap terminal reads the system information of the neighboring cell during the neighboring cell measurement, it will affect the scheduling restriction or interruption of the current cell. In order to avoid the influence of the additional processing time of the eRedcap terminal for the system information of the neighboring cell on the scheduling restriction or interruption of the current cell, the additional offset X (i.e., the fourth time) is introduced to solve the problem that certain scheduling policies of the base station do not match the terminal's processing capability, thereby improving communication performance.

FIG. 11 is a flowchart of a communication method according to embodiments of the present disclosure, the communication method is performed by a network device. Based on embodiments described with reference to FIG. 7, as shown in FIG. 11, the method includes but is not limited to the following steps:

S1101, a second message sent by a terminal is received.

The second message indicates whether the terminal has a first capability, and the first capability supports back-to-back scheduling.

In some embodiments, the eRedCap terminal may also support an additional reporting signaling to indicate to the base station whether it has the capability to support the back-to-back scheduling.

S1102, it is determined that the scheduling policy is a second scheduling policy.

The second scheduling policy is that the back-to-back scheduling by the network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

In other words, the second scheduling policy is that the back-to-back scheduling by the network device for the eRedCap terminal is allowed.

In some embodiments, in step S1102, the eRedcap terminal may indicate to the network device that it supports the back-to-back scheduling, and when the network device performs the back-to-back scheduling for the eRedcap terminal, the following steps may be performed.

S1103, it is determined that the first time is greater than or equal to a second time.

In some embodiments, the network device may determine that the first time is greater than or equal to the second time according to a protocol. For example, the network device may determine the second time according to the protocol, and determine the first time according to the second time.

In some embodiments, the second time is a PDSCH processing time of a non-enhanced reduced capability (non-eRedCap) terminal.

In other words, the eRedcap terminal may have an additional processing capability to support the back-to-back scheduling, such as a higher parallel processing capability, which supports the eRedcap terminal to cover the additional processing time of the eRedcap terminal without introducing additional processing time. If the terminal has the additional PDSCH baseband processing capability, there is no need to introduce additional time for the eRedcap terminal, and the back-to-back scheduling will not be affected.

In other words, the eRedcap terminal may support additional reporting signaling. For example, the terminal has an additional parallel processing capability, for example, the terminal has an additional pipeline for parallel processing, so for additional broadcast PDSCH transmission of the eRedcap terminal, PDSCH decoding and PUCCH preparation still can be performed within the PDSCH processing time of the non-eRedcap terminal without introducing additional time.

In some embodiments, the network device may determine the PDSCH processing time of the non-eRedcap terminal as the PDSCH processing time of the eRedcap terminal.

In some embodiments, there is no time interval between the first channel and the second channel, in other words, the network device performs the back-to-back scheduling for the eRedcap terminal, and the broadcast PDSCH is earlier than the unicast PDSCH. In an example, although the scheduling policy is that the back-to-back scheduling by the network device for the eRedCap terminal is allowed, when the first channel is earlier than the second channel, the network device is restricted from performing back-to-back scheduling. In order to avoid the influence of the additional processing time of the broadcast PDSCH on the unicast PDSCH, the terminal reports its capability to the base station to indicate that it is able to perform the PDSCH decoding and PUCCH preparation within the PDSCH processing time of the non-eRedcap terminal, without affecting the subsequent second channel and information feedback to the network device, thereby avoiding the problem that the processing time of the eRedcap terminal does not match certain scenarios, such as the problem that the back-to-back scheduling does not match the with the capability of the eRedcap terminal.

S1104, the first channel and the second channel are scheduled based on the second scheduling policy.

In some embodiments, the first channel is earlier than the second channel. Optionally, the first channel is a broadcast PDSCH, and the second channel is a unicast PDSCH.

In some embodiments, the eRedcap terminal may schedule the first channel and the second channel, such as through the back-to-back scheduling.

In some embodiments, the first time may be used by the terminal for processing the second channel and preparing a first message.

In some embodiments, the first time may also be used for the time-domain resource indication of the network device.

In some embodiments, after receiving the first channel and the second channel, the eRedcap terminal may process the second channel and prepare the first message based on the first time.

In other words, the eRedcap terminal may process the second channel based on the PDSCH processing time of the non-eRedcap terminal. In other words, the second channel processing is performed after the PDSCH processing time of the non-eRedcap terminal. Since the eRedcap terminal has a certain processing capability, such as a higher parallel processing capability, the eRedcap terminal is able to perform multiple times of processing within the PDSCH processing time of the non-eRedcap terminal, thereby avoiding the influence of the additional processing time of the eRedcap terminal on the processing of the second channel, and the first message is prepared for subsequent transmission to the network device.

S1105, a seventh time is sent to the terminal.

In some embodiments, the seventh time is greater than or equal to the first time.

In some embodiments, the seventh time may be a base station scheduling time K1, which needs to satisfy a constraint condition of greater than or equal to the first time. That is, the base station scheduling time should be greater than or equal to the PDSCH processing time of the terminal.

In these embodiments, $K1 \geq T_{proc,1}$, where $T_{proc,1}$ represents the PDSCH processing time of the non-eRedcap terminal.

In some embodiments, the network device may send DCI signaling to the terminal, and the DCI signaling includes the seventh time. In other words, the seventh time may be carried by the DCI signaling. The seventh time may also be carried by other downlink signaling, which is not limited by the present disclosure.

S1106, the first message sent by the terminal after the seventh time after the last symbol of the second channel is received.

In some embodiments, the first message is at least one of: a hybrid automatic repeat request-acknowledgement (HARQ-ACK) message or a random access message msg3.

For example, the first message may be an HARQ-ACK message fed back by the terminal to the network device. For application scenarios of the HARQ-ACK message, reference may be made to the relevant protocol, which will not be elaborated here. The feeding back of the HARQ-ACK message will be affected by the additional processing time of the eRedcap terminal. Therefore, the eRedcap terminal sends the HARQ-ACK message to the network device after the seventh time after the last symbol of the second channel, which avoids the influence of the additional processing time of the eRedcap terminal.

For example, the first message may be msg3 sent by the terminal to the network device. For example, in a case where the signal carried by the broadcast PDSCH is RAR, the terminal may send msg3 to the network device, and the transmission of msg3 will be affected by the additional processing time of the eRedcap terminal. Therefore, the eRedcap terminal sends msg3 to the network device after the seventh time after the last symbol of the second channel, which avoids the influence of the additional processing time of the eRedcap terminal.

In these embodiments, since the scheduling policy is that the back-to-back scheduling by the network device for the eRedcap terminal is allowed, and the terminal supports reporting of capability information to the network device, when the terminal's capability is able to cover the additional processing time of the eRedcap terminal, the eRedcap terminal is still able to perform multiple times of PDSCH processing within the PDSCH processing time of the non-eRedcap terminal, without introducing additional offset, thereby avoiding the influence of the additional processing time of the eRedcap terminal for the broadcast PDSCH on the subsequent unicast PDSCH and the signal transmission to the network device, thereby solving the problem that certain scheduling policies of the base station do not match the terminal's processing capability, avoiding problem occurrence in the back-to-back scheduling between the broadcast PDSCH and unicast PDSCH for the eRedCap terminal, and thus improving communication performance.

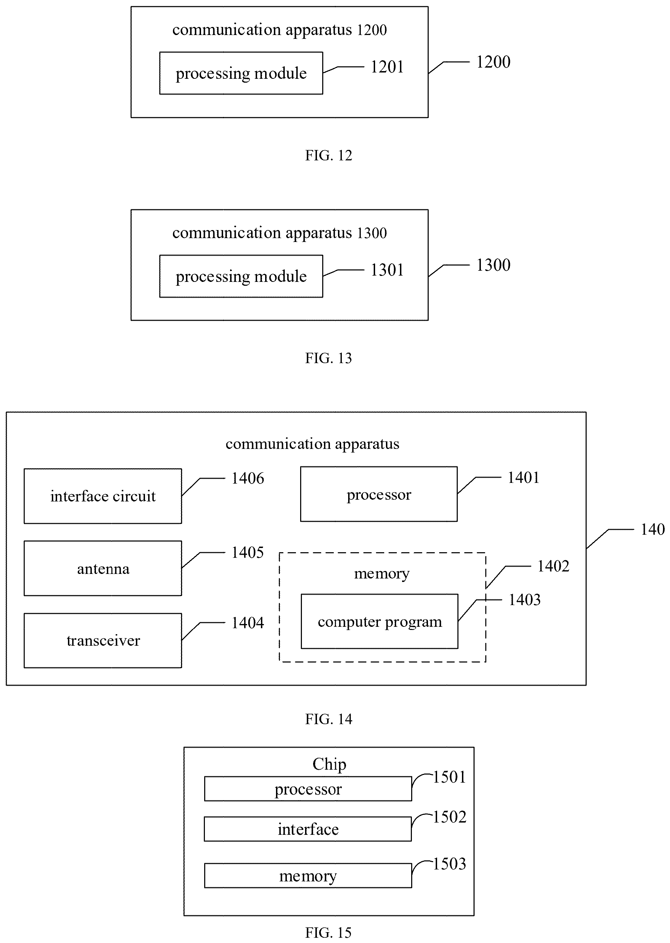

FIG. 12 is a schematic block diagram of a communication apparatus 1200 according to embodiments of the present disclosure. The communication apparatus 1200 shown in FIG. 12 may include a processing module.

The processing module is configured to: determine a scheduling policy, and determine a first time corresponding to the scheduling policy according to a protocol. The first time includes a physical downlink shared channel (PDSCH) processing time.

Optionally, the terminal is an enhanced reduced capability (eRedcap) terminal, and the processing module is further configured to: determine the scheduling policy to be a first scheduling policy. The first scheduling policy is that there is a first time interval between a time slot of a first channel scheduled by a network device for the eRedcap terminal and a time slot of a second channel scheduled by the network device for the eRedcap terminal, the first channel is a broadcast PDSCH, and the second channel is a unicast PDSCH.

Optionally, the processing module is further configured to: determine that the first time is greater than or equal to a second time. The second time is a PDSCH processing time of a non-enhanced reduced capability (non-eRedCap) terminal.

Optionally, the terminal is an enhanced reduced capability (eRedcap) terminal, and the processing module is configured to: determine the scheduling policy to be a second scheduling policy. The second scheduling policy is that back-to-back scheduling by a network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device, the first channel is a broadcast PDSCH, and the second channel is a unicast PDSCH.

Optionally, the terminal is an enhanced reduced capability (eRedcap) terminal, and the processing module is configured to: determine the scheduling policy to be a third scheduling policy. The third scheduling policy is that the eRedcap terminal reads system information for a first cell during cell measurement, and the first cell is not a current serving cell of the eRedcap terminal.

Optionally, the processing module is configured to: determine that the first time is greater than or equal to a third time. The third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$.

Optionally, the baseband processing includes at least one of channel estimation, channel equalization, signal detection, or demodulation.

Optionally, in a case where the scheduling policy is a third scheduling policy, the apparatus further includes: a transceiver module configured to read system information for a first cell. The processing module is configured to: determine a fifth time. The fifth time is a sum of the fourth time and a sixth time, and the sixth time is a time of scheduling restriction or interruption of the non-eRedCap terminal. Within the fifth time, the eRedCap terminal does not perform signal transmission and/or reception in a second cell, and the second cell is a current serving cell of the eRedcap terminal.

Optionally, the terminal is an enhanced reduced capability (eRedcap) terminal, and the transceiver module is configured to: perform signal reception on the first channel and the second channel based on the first scheduling policy and/or the second scheduling policy. The first channel is earlier than the second channel.

Optionally, for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

Optionally, the transceiver module is configured to send a second message to a network device. The second message indicates whether the terminal has a first capability, and the first capability supports back-to-back scheduling.

Optionally, the processing module is configured to: determine that the first time is greater than or equal to a second time in a case where the scheduling policy is a second scheduling policy. The second time is a PDSCH processing time of a non-enhanced reduced capability (non-eRedCap) terminal.

Optionally, the transceiver module is configured to: receive a seventh time sent by the network device, where the seventh time is greater than or equal to the first time; and send a first message to the network device after the seventh time after a last symbol of the second channel.

Optionally, the first message is at least one of a hybrid automatic repeat request-acknowledgment (HARQ-ACK) message or a random access message (msg3).

Optionally, the processing module is configured to: process the second channel and prepare the first message based on the first time.

FIG. 13 is a schematic block diagram of a communication apparatus 1300 according to embodiments of the present disclosure. The communication apparatus 1300 shown in FIG. 13 is configured in a network device may include a processing module.

The processing module is configured to: determine a scheduling policy, and determine a first time corresponding to the scheduling policy according to a protocol. The first time includes a physical downlink shared channel (PDSCH) processing time.

Optionally, the processing module is configured to: determine the scheduling policy to be a first scheduling policy. The first scheduling policy is that there is a first time interval between a time slot of a first channel scheduled by the network device for an enhanced reduced capability (eRedcap) terminal and a time slot of a second channel scheduled by the network device for the eRedcap terminal, the first channel is a broadcast PDSCH, and the second channel is a unicast PDSCH.

Optionally, the processing module is configured to: determine that the first time is greater than or equal to a second time. The second time is a PDSCH processing time of a non-enhanced reduced capability (non-eRedCap) terminal.

Optionally, the processing module is configured to: determine the scheduling policy to be a second scheduling policy. The second scheduling policy is that back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device. The first channel is a broadcast PDSCH, and the second channel is a unicast PDSCH.

Optionally, the processing module is configured to: determine the scheduling policy to be a third scheduling policy. The third scheduling policy is that an eRedcap terminal reads system information for a first cell during cell measurement, and the first cell is not a current serving cell of the eRedcap terminal.

Optionally, the processing module is configured to: determine that the first time is greater than or equal to a third time. The third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and N ≥ 1.

Optionally, the baseband processing includes at least one of channel estimation, channel equalization, signal detection, or demodulation.

Optionally, in a case where the scheduling policy is a third scheduling policy, the apparatus further includes: a transceiver module configured to: send system information for a first cell to a terminal; and determine a fifth time. The fifth time is a sum of the fourth time and a sixth time, and the sixth time is a time of scheduling restriction or interruption of the non-eRedCap terminal. The network device does not perform transmission and reception scheduling on the terminal within the fifth time, and the network device does not send a message to or receive a message from the terminal within the fifth time.

Optionally, the apparatus further includes a scheduling module configured to: schedule the first channel and the second channel based on the first scheduling policy and/or the second scheduling policy. The first channel is earlier than the second channel.

Optionally, for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

Optionally, the transceiver module is configured to: receive a second message sent by a terminal. The second message indicates whether the terminal has a first capability, and the first capability supports back-to-back scheduling.

Optionally, the processing module is configured to: determine that the first time is greater than or equal to a second time in a case where the scheduling policy is a second scheduling policy. The second time is a PDSCH processing time of a non-enhanced reduced capability (non-eRedCap) terminal.

Optionally, the transceiver module is configured to: send a seventh time to a terminal, where the seventh time is greater than or equal to the first time; and receive a first message which is sent by the terminal after the seventh time after a last symbol of the second channel.

Optionally, the first message is at least one of a hybrid automatic repeat request-acknowledgment (HARQ-ACK) message or a random access message (msg3).

Referring to FIG. 14, FIG. 14 is a schematic block diagram of another communication apparatus 140 according to embodiments of the present disclosure. The communication apparatus 140 may be a network device, may also be a terminal, may also be a chip, a chip system, or a processor that supports the network device to implement the above method, or may also be a chip, a chip system, or a processor that supports the terminal to implement the above method. The apparatus may be used to implement the methods as described in the above method embodiments, and for details, reference may be made to the descriptions on the above method embodiments.

The communication apparatus 140 may include one or more processors 1401. The processor 1401 may be a general-purpose processor or a special-purpose processor. For example, it may be a baseband processor or a central processing unit. The baseband processor may be configured to process a communication protocol and communication data, and the central processing unit may be configured to control a communication apparatus (such as a base station, a baseband chip, a terminal, a terminal chip, a DU or a CU, etc.), execute computer programs, and process data of computer programs.

Optionally, the communication apparatus 140 may further include one or more memories 1402 that may have stored therein a computer program 1403. The processor 1401 executes the computer program 1403 to cause the communication apparatus 140 to implement the methods as described in the above method embodiments. Optionally, the memory 1402 may have stored therein data. The communication apparatus 140 and the memory 1402 may be set separately or integrated together.

Optionally, the communication apparatus 140 may further include a transceiver 1404 and an antenna 1405. The transceiver 1404 may be called a transceiver element, a transceiver machine, a transceiver circuit or the like, for implementing a transceiver function. The transceiver 1404 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication apparatus 140 may further include one or more interface circuits 1406. The interface circuit 1406 is configured to receive a code instruction and transmit the code instruction to the processor 1401. The processor 1401 runs the code instruction to enable the communication apparatus 140 to execute the methods as described in the foregoing method embodiments.

The communication apparatus 140 is a terminal configured to achieve the functions of the terminal in the aforementioned embodiments.

The communication apparatus 140 is a network device configured to achieve the functions of the network device in the aforementioned embodiments.

In an implementation manner, the processor 1401 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an implementation manner, the processor 1401 may have stored therein a computer program 1403 that, when run on the processor 1401, causes the communication apparatus 140 to implement the method as described in the foregoing method embodiments. The computer program 1403 may be solidified in the processor 1401, and in this case, the processor 1401 may be implemented by hardware.

In an implementation manner, the communication apparatus 140 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal, but the scope of the communication apparatus described in the present disclosure is not limited thereto, and a structure of the communication apparatus is not limited by FIG. 14. The communication apparatus may be a stand-alone device or may be a part of a larger device. For example, the communication apparatus may be:

> (1) a stand-alone integrated circuit (IC), or a chip, or a chip system or a subsystem;
> (2) a set of one or more ICs, optionally, the set of ICs may also include a storage component for storing data and computer programs;
> (3) an ASIC, such as a modem;
> (4) a module that may be embedded in other devices;
> (5) a receiver, a terminal, an intelligent terminal, a cellular phone, a wireless device, a handheld machine, a mobile unit, a vehicle device, a network device, a cloud device, an artificial intelligence device, etc.;
> (6) others.

For the case where the communication apparatus may be a chip or a chip system, reference may be made to a schematic structural diagram of the chip shown in FIG. 15. The chip shown in FIG. 15 includes a processor 1501 and an interface 1502. In the chip, one or more processors 1501 may be provided, and a plurality of interfaces 1502 may be provided.

Embodiments of the present disclosure also provide a chip, and reference may be made to the schematic diagram of the chip shown in FIG. 15. The chip shown in FIG. 15 includes a processor 1501 and an interface 1502. There may one or more processors 1201, and there may be a plurality of interfaces 1502. Optionally, the chip also includes a memory 1503, and the memory 1503 is used to store computer instructions that, when executed by the processor, cause the electronic device to perform the communication method described in the above embodiment of the present disclosure.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a communication system. The system includes a terminal and a network device, the terminal is configured to perform the embodiments as shown in FIG. 2 to FIG. 6, and the network device is configured to perform the embodiments as shown in FIG. 7 to FIG. 11.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, apparatus and unit may refer to the corresponding process in the foregoing method embodiments, which will not be repeated here.

The above describes some embodiments of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

**Claims**

1. A communication method, performed by a terminal, comprising:

   determining a scheduling policy, and
   determining a first time corresponding to the scheduling policy according to a protocol,
   wherein the first time comprises a physical downlink shared channel (PDSCH) processing time.

2. The method according to claim 1, wherein the terminal is an enhanced reduced capability (eRedcap) terminal, and determining the scheduling policy comprises:

   determining the scheduling policy to be a first scheduling policy,
   wherein the first scheduling policy is that there is a first time interval between a time slot of a first channel scheduled by a network device for the eRedcap terminal and a time slot of a second channel scheduled by the network device for the eRedcap terminal, the first channel is a broadcast PDSCH, and the second channel is a unicast PDSCH.

3. The method according to claim 2, wherein determining the first time corresponding to the scheduling policy according to the protocol comprises:
   determining that the first time is greater than or equal to a second time, wherein the second time is a PDSCH processing time of a non-enhanced reduced capability (non-eRedCap) terminal.

4. The method according to claim 1, wherein the terminal is an enhanced reduced capability (eRedcap) terminal, and determining the scheduling policy comprises:

   determining the scheduling policy to be a second scheduling policy,
   wherein the second scheduling policy is that back-to-back scheduling by a network device for the eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device,
   wherein the first channel is a broadcast PDSCH, and the second channel is a unicast PDSCH.

5. The method according to claim 1, wherein the terminal is an enhanced reduced capability (eRedcap) terminal, and determining the scheduling policy comprises:

   determining the scheduling policy to be a third scheduling policy,
   wherein the third scheduling policy is that the eRedcap terminal reads system information for a first cell during cell measurement, and the first cell is not a current serving cell of the eRedcap terminal.

6. The method according to claim 4 or 5, wherein determining the first time corresponding to the scheduling policy according to the protocol comprises:
   determining that the first time is greater than or equal to a third time; wherein the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$.

7. The method according to claim 6, wherein the baseband processing comprises at least one of channel estimation, channel equalization, signal detection, or demodulation.

8. The method according to claim 6 or 7, wherein in a case where the scheduling policy is a third scheduling policy, the method further comprises:

   reading system information for a first cell; and
   determining a fifth time, wherein the fifth time is a sum of the fourth time and a sixth time, and the sixth time is a time of scheduling restriction or interruption of the non-eRedCap terminal;
   wherein within the fifth time, the eRedCap terminal does not perform signal transmission and/or reception in a second cell, and the second cell is a current serving cell of the eRedcap terminal.

9. The method according to claim 2 or 4, wherein the terminal is an enhanced reduced capability (eRedcap) terminal, and the method further comprises:
performing signal reception on the first channel and the second channel based on the first scheduling policy or the second scheduling policy, wherein the first channel is earlier than the second channel.

10. The method according to claim 2 or 6, wherein
for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

11. The method according to any one of claims 1 to 10, further comprising:

sending a second message to a network device,
wherein the second message indicates whether the terminal has a first capability, and the first capability supports back-to-back scheduling.

12. The method according to claim 11, wherein determining the first time corresponding to the scheduling policy comprises:

determining that the first time is greater than or equal to a second time in a case where the scheduling policy is a second scheduling policy, wherein the second time is a PDSCH processing time of a non-enhanced reduced capability (non-eRedCap) terminal;
wherein the second scheduling policy is that back-to-back scheduling by a network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device,
wherein the first channel is a broadcast PDSCH, and the second channel is a unicast PDSCH.

13. The method according to any one of claims 2 to 12, further comprising:

receiving a seventh time sent by the network device, wherein the seventh time is greater than or equal to the first time;
sending a first message to the network device after the seventh time after a last symbol of the second channel.

14. The method according to claim 13, wherein the first message is at least one of a hybrid automatic repeat request-acknowledgment (HARQ-ACK) message or a random access message (msg3).

15. The method according to claim 13 or 14, further comprising:
processing the second channel and preparing the first message based on the first time.

16. A communication method, performed by a network device, comprising:

determining a scheduling policy, and
determining a first time corresponding to the scheduling policy according to a protocol,
wherein the first time comprises a physical downlink shared channel (PDSCH) processing time.

17. The method according to claim 16, wherein determining the scheduling policy comprises:

determining the scheduling policy to be a first scheduling policy,
wherein the first scheduling policy is that there is a first time interval between a time slot of a first channel scheduled by the network device for an enhanced reduced capability (eRedcap) terminal and a time slot of a second channel scheduled by the network device for the eRedcap terminal, the first channel is a broadcast PDSCH, and the second channel is a unicast PDSCH.

18. The method according to claim 17, wherein determining the first time corresponding to the scheduling policy according to the protocol comprises:

determining that the first time is greater than or equal to a second time, wherein the second time is a PDSCH processing time of a non-enhanced reduced capability (non-eRedCap) terminal.

19. The method according to claim 16, wherein determining the scheduling policy comprises:

determining the scheduling policy to be a second scheduling policy,
wherein the second scheduling policy is that back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device,
wherein the first channel is a broadcast PDSCH, and the second channel is a unicast PDSCH.

20. The method according to claim 16, wherein determining the scheduling policy comprises:

determining the scheduling policy to be a third scheduling policy,
wherein the third scheduling policy is that an eRedcap terminal reads system information for a first cell during cell measurement, and the first cell is not a current serving cell of the eRedcap terminal.

21. The method according to claim 19 or 20, wherein determining the first time corresponding to the scheduling policy according to the protocol comprises:
determining that the first time is greater than or equal to a third time; wherein the third time is a sum of a second time and a fourth time, the second time is a PDSCH processing time of a non-enhanced reduced capability (non-eRedCap) terminal, and the fourth time is a time for the eRedcap terminal to perform N-1 times of baseband processing of PDSCH, where N is the number of times of baseband processing performed by the eRedcap terminal for one PDSCH reception, and N is a positive integer and $N \geq 1$.

22. The method according to claim 21, wherein the baseband processing comprises at least one of channel estimation, channel equalization, signal detection, or demodulation.

23. The method according to claim 21 or 22, wherein in a case where the scheduling policy is a third scheduling policy, the method further comprises:

sending system information for a first cell to a terminal; and
determining a fifth time, wherein the fifth time is a sum of the fourth time and a sixth time, and the sixth time is a time of scheduling restriction or interruption of the non-eRedCap terminal;
wherein the network device does not perform transmission and reception scheduling on the terminal within the fifth time, and the network device does not send a message to or receive a message from the terminal within the fifth time.

24. The method according to claim 17 or 20, further comprising:
scheduling the first channel and the second channel based on the first scheduling policy or a second scheduling policy, wherein the first channel is earlier than the second channel.

25. The method according to claim 17 or 21, wherein
for a subcarrier spacing (SCS) of 15 kHz, a value of a first time interval and/or a fourth time is 0.5 ms or 1 ms; for an SCS of 30 kHz, a value of a first time interval and/or a fourth time is 0.25 ms or 0.5 ms.

26. The method according to any one of claims 16 to 25, further comprising:

receiving a second message sent by a terminal,
wherein the second message indicates whether the terminal has a first capability, and the first capability supports back-to-back scheduling.

27. The method according to claim 26, wherein determining the first time corresponding to the scheduling policy comprises:

determining that the first time is greater than or equal to a second time in a case where the scheduling policy is a second scheduling policy, wherein the second time is a PDSCH processing time of a non-enhanced reduced capability (non-eRedCap) terminal;

wherein the second scheduling policy is that back-to-back scheduling by the network device for an eRedCap terminal is allowed, the back-to-back scheduling indicates that there is no time interval between a symbol of a first channel scheduled by the network device and a symbol of a second channel scheduled by the network device, or there is no time interval between a time slot of a first channel scheduled by the network device and a time slot of a second channel scheduled by the network device,

the first channel is a broadcast PDSCH, and the second channel is a unicast PDSCH.

28. The method according to any one of claims 17 to 27, further comprising:

sending a seventh time to a terminal, wherein the seventh time is greater than or equal to the first time;
receiving a first message which is sent by the terminal after the seventh time after a last symbol of the second channel.

29. The method according to claim 28, wherein the first message is at least one of a hybrid automatic repeat request-acknowledgment (HARQ-ACK) message or a random access message (msg3).

30. A communication apparatus, comprising a processing module configured to: determine a scheduling policy, and determine a first time corresponding to the scheduling policy according to a protocol,
wherein the first time comprises a physical downlink shared channel (PDSCH) processing time.

31. A communication apparatus, comprising a processing module configured to: determine a scheduling policy, and determine a first time corresponding to the scheduling policy according to a protocol,
wherein the first time comprises a physical downlink shared channel (PDSCH) processing time.

32. A communication device, comprising:

a transceiver;
a memory; and
a processor, connected to the transceiver and the memory, respectively, and configured to execute computer executable instructions on the memory, control wireless signal reception and transmission of the transceiver, and implement the method according to any one of claims 1-29.

33. A computer storage medium, having stored therein computer executable instructions that, when executed by a processor, cause the method according to any one of claims 1 to 29 to be performed.

34. A communication system, comprising:

a terminal, configured to perform the method according to any one of claims 1 to 15; and
a network device, configured to perform the method according to any one of claims 16 to 29.

FIG. 1

| a scheduling policy is determined | S201 |

| a first time corresponding to the scheduling policy is determined | S202 |

FIG. 2

| it is determined that the scheduling policy is a first scheduling policy | S301 |

| it is determined that the first time is greater than or equal to a second time | S302 |

| the first channel and the second channel are received based on the first scheduling policy | S304 |

| the second channel is processed and a first message is prepared based on the first time | S305 |

| a seventh time sent by the network device is received | S306 |

| a first message is sent to the network device after the seventh time after the last symbol of the second channel | S307 |

FIG. 3

33

it is determined that the scheduling policy is a second scheduling policy — S401

↓

it is determined that the first time is greater than or equal to a third time — S402

↓

the first channel and the second channel are received based on the second scheduling policy — S403

↓

the second channel is processed and a first message is prepared based on the first time — S404

↓

a seventh time sent by the network device is received — S405

↓

a first message is sent to the network device after the seventh time after the last symbol of the second channel — S406

FIG. 4

it is determined that the scheduling policy is a third scheduling policy — S501

↓

it is determined that the first time is greater than or equal to a third time — S502

↓

the system information for the first cell is read — S503

↓

a fifth time is determined — S504

↓

signal transmission and/or reception are performed in the second cell after the fifth time — S505

FIG. 5

a second message is sent to the network device — S601

↓

it is determined that the scheduling policy is a second scheduling policy — S602

↓

it is determined that the first time is greater than or equal to a second time — S603

↓

the first channel and the second channel are received based on the second scheduling policy — S604

↓

the second channel is processed and a first message is prepared based on the first time — S605

↓

a seventh time sent by the network device is received — S606

↓

the first message is sent to the network device after the seventh time after the last symbol of the second channel — S607

FIG. 6

a scheduling policy is determined — S701

↓

a first time corresponding to the scheduling policy is determined — S702

FIG. 7

it is determined that the scheduling policy is a first scheduling policy — S801

↓

it is determined that the first time is greater than or equal to a second time — S802

↓

the first channel and the second channel are scheduled based on the first scheduling policy — S803

↓

a seventh time is sent to the terminal — S804

↓

a first message sent by the terminal after the seventh time after the last symbol of the second channel is received — S805

FIG. 8

it is determined that the scheduling policy is a second scheduling policy — S901

↓

it is determined that the first time is greater than or equal to a third time — S902

↓

the first channel and the second channel are scheduled based on the second scheduling policy — S903

↓

a seventh time is sent to the terminal — S904

↓

a first message sent by the terminal after the seventh time after the last symbol of the second channel is received — S905

FIG. 9

it is determined that the scheduling policy is a third scheduling policy — S1001

↓

it is determined that the first time is greater than or equal to a third time — S1002

↓

the system information for the first cell is sent to the terminal — S1003

↓

a fifth time is determined — S1004

↓

transmission and reception scheduling for the terminal is performed in the second cell after the fifth time — S1005

FIG. 10

a second message sent by a terminal is received — S1101

↓

it is determined that the scheduling policy is a second scheduling policy — S1102

↓

it is determined that the first time is greater than or equal to a second time — S1103

↓

the first channel and the second channel are scheduled based on the second scheduling policy — S1104

↓

a seventh time is sent to the terminal — S1105

↓

the first message sent by the terminal after the seventh time after the last symbol of the second channel is received — S1106

FIG. 11

communication apparatus 1200

processing module — 1201 — 1200

FIG. 12

communication apparatus 1300

processing module — 1301 — 1300

FIG. 13

communication apparatus

interface circuit — 1406    processor — 1401

antenna — 1405    memory — 1402

transceiver — 1404    computer program — 1403

— 140

FIG. 14

Chip
processor — 1501
interface — 1502
memory — 1503

FIG. 15

## INTERNATIONAL SEARCH REPORT

| International application No. |
| --- |
| **PCT/CN2023/096115** |

| A. | CLASSIFICATION OF SUBJECT MATTER |
| --- | --- |

H04W 72/30(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 调度, 背对背, 背靠背, 信道, 相邻, 间隙, 物理下行共享信道, 下行物理共享信道, 时间, 时延, 增强型能力降低, 终端, 类型, schedul+, channel, gap, PDSCH, time, ?RedCap, UE, type

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109803430 A (HUAWEI TECHNOLOGIES CO., LTD.) 24 May 2019 (2019-05-24) description, paragraphs [0002]-[0231], and figures 1-7B | 1, 11, 16, 26, 30-34 |
| A | CN 111757510 A (SHARP CORP. et al.) 09 October 2020 (2020-10-09) entire document | 1-34 |
| A | CN 115997461 A (BEIJING XIAOMI MOBILE SOFTWARE CO., LTD.) 21 April 2023 (2023-04-21) entire document | 1-34 |
| A | CN 115004617 A (BEIJING XIAOMI MOBILE SOFTWARE CO., LTD.) 02 September 2022 (2022-09-02) entire document | 1-34 |
| A | WO 2022265567 A1 (TELEFONAKTIEBOLAGET LM ERICSSON (PUBL)) 22 December 2022 (2022-12-22) entire document | 1-34 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 December 2023** | **11 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096115**

| Patent document cited in search report | | | Publication date (day/month/year) | Patent family member(s) | | | Publication date (day/month/year) |
|---|---|---|---|---|---|---|---|
| CN | 109803430 | A | 24 May 2019 | WO | 2019096098 | A1 | 23 May 2019 |
| CN | 111757510 | A | 09 October 2020 | None | | | |
| CN | 115997461 | A | 21 April 2023 | None | | | |
| CN | 115004617 | A | 02 September 2022 | None | | | |
| WO | 2022265567 | A1 | 22 December 2022 | None | | | |

Form PCT/ISA/210 (patent family annex) (July 2022)